(19) Europäisches Patentamt
European Patent Office
Office européen des brevets

(11) **EP 3 438 970 A1**

(12) **EUROPEAN PATENT APPLICATION**
published in accordance with Art. 153(4) EPC

(43) Date of publication:
**06.02.2019 Bulletin 2019/06**

(51) Int Cl.:
**G10K 11/178** (2006.01)    **B64D 11/06** (2006.01)

(21) Application number: **17774858.9**

(22) Date of filing: **27.03.2017**

(86) International application number:
**PCT/JP2017/012238**

(87) International publication number:
**WO 2017/170321 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.03.2016  JP 2016065342**
**07.07.2016  JP 2016134780**

(71) Applicant: **Panasonic Intellectual Property Management Co., Ltd.**
**Osaka-shi, Osaka 540-6207 (JP)**

(72) Inventors:
• **ARAKI Junji**
**Osaka-shi, Osaka 540-6207 (JP)**
• **KUBOTA Kenichi**
**Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **NOISE REDUCTION DEVICE**

(57)    A noise reduction device includes a plurality of noise microphones, a noise controller, and a control speaker. The noise controller generates a control sound signal for reducing, at a center of control in a control space, noise detected by the noise microphones. The number of noise microphones (420a) that are disposed closer than a distance d from the center of control is less than the number of noise microphones (420b through 420g) that are disposed farther than the distance d from the center of control, when the distance d is expressed as $d = d0 + t \times v - \lambda / 2$, where $\lambda$ is a wavelength corresponding to a control frequency f in the noise microphones, d0 is the distance from the center of control to the control speaker, t is the control delay time in the control speaker, and v is sound velocity. The noise microphones (420b through 420g) that are disposed farther than the distance d from the center of control are approximately equally spaced apart.

FIG. 1

## Description

TECHNICAL FIELD

The present disclosure relates to a noise reduction device for use inside a hermetically sealed structure such as an aircraft or a railroad vehicle.

BACKGROUND ART

Patent Literature (PTL) 1 relates to, in a silencing device for an electronics device such as an air conditioner, the positioning of a microphone and a speaker, noise propagation time, and control sound emitted from a speaker. PTL 1 discloses a method for enhancing the silencing effect on low-frequency components of noise by taking delay time into consideration. PTL 2 discloses a method for enhancing the silencing effect on random noise by taking the positioning of a speaker into consideration with respect to the location at which noise is to be reduced (hereinafter also referred to as the "silencing center" or "control point"). PTL 3 discloses a method of setting a control upper limit frequency to effectively achieving a noise reduction effect even in environments in which the limitations of time causality cannot be met due to positional relationship between microphones used for noise detection, speakers, and the silencing center.

Citation List

Patent Literature

PTL 1: Japanese Unexamined Patent Application Publication No. H07-160280
PTL 2: Japanese Unexamined Patent Application Publication No. H10-171468
PTL 3: Japanese Unexamined Patent Application Publication No. 2010-188752

SUMMARY OF THE INVENTION

TECHNICAL PROBLEM

The present disclosure has an object to provide a noise reduction device capable of effectively reducing noise in a wide frequency band ranging from low to high frequencies, even in environments where there are many noise sources or noise comes from various directions due to being repeatedly reflected, like in seats in an aircraft.

SOLUTION TO PROBLEM

A noise reduction device according to the present disclosure includes a plurality of noise detectors, a noise controller, and a control sound outputter. The noise controller generates a control sound signal for reducing, at a center of control in a control space, the noise detected by the plurality of noise detectors. The control sound outputter that outputs sound based on the control sound signal. A number of the plurality of noise detectors that are disposed closer than a distance d from the center of control is less than a number of the plurality of noise detectors that are disposed farther than the distance d from the center of control, when the distance d is expressed as $d = d0 + t \times v - \lambda / 2$, where $\lambda$ is a wavelength corresponding to a control frequency f in the plurality of noise detectors, d0 is a distance from the center of control to the control sound outputter, t is a control delay time in the control sound outputter, and v is sound velocity. The plurality of noise detectors that are disposed farther than the distance d from the center of control are approximately equally spaced apart.

ADVANTAGEOUS EFFECT OF INVENTION

With the noise reduction device according to the present disclosure, it is possible to effectively reduce noise in a wide frequency band ranging from low to high frequencies, even in environments where there are many noise sources or noise comes from various directions due to being repeatedly reflected, like in seats in an aircraft.

BRIEF DESCRIPTION OF DRAWINGS

FIG. 1 is a plan view illustrating the environment inside an aircraft in which a noise reduction device according to an embodiment of the present disclosure is installed.
FIG. 2 is an enlarged plan view illustrating the environment in the aircraft illustrated in FIG. 1.
FIG. 3A is a block diagram illustrating the basic configuration of the noise reduction device installed in the aircraft illustrated in FIG. 1.
FIG. 3B illustrates a method of superimposing control sound generated by a control sound generator with noise generated by a noise source.
FIG. 4 is a plan view illustrating an arrangement example of the noise reduction device installed in the vicinity of a seat in the aircraft illustrated in FIG. 1.
FIG. 5 is a block diagram illustrating the basic configuration of a feedforward noise reduction device.
FIG. 6 schematically illustrates an arrangement of noise microphones, etc., in the noise reduction device illustrated in FIG. 4.
FIG. 7 is a block diagram illustrating the configuration when a plurality of noise microphones and an error microphones are used in the noise reduction device illustrated in FIG. 3A.
FIG. 8 illustrates an arrangement example of noise microphones, etc., in the noise reduction device according to the present embodiment.

FIG. 9 illustrates an arrangement example of noise microphones, etc., in a noise reduction device according to a comparative example in contrast to the present embodiment illustrated in FIG. 8.

FIG. 10 illustrates an arrangement example of noise microphones, etc., in a noise reduction device according to a comparative example in contrast to the present embodiment illustrated in FIG. 8.

FIG. 11 is a graph illustrating results verifying the noise reduction effect achieved by the noise reduction device according to the comparative example illustrated in FIG. 9 and FIG. 10.

FIG. 12 is a graph illustrating results verifying the noise reduction effect achieved by the noise reduction device according to the present implementation example illustrated in FIG. 8 and the noise reduction device according to the comparative example illustrated in FIG. 9.

FIG. 13 is a graph illustrating results verifying the noise reduction effect achieved by the noise reduction device according to the present implementation example illustrated in FIG. 8 and the noise reduction device according to the comparative example illustrated in FIG. 9.

FIG. 14 illustrates an arrangement example of noise microphones, etc., in the noise reduction device according to another embodiment of the present disclosure.

FIG. 15 illustrates an arrangement example of noise microphones, etc., in the noise reduction device according to yet another embodiment of the present disclosure.

FIG. 16 illustrates an arrangement example of noise microphones, etc., in the noise reduction device according to yet another embodiment of the present disclosure.

FIG. 17 illustrates an arrangement example of noise microphones, etc., in the noise reduction device according to yet another embodiment of the present disclosure.

FIG. 18 illustrates an arrangement example of noise microphones, etc., in the noise reduction device according to yet another embodiment of the present disclosure.

FIG. 19 illustrates an arrangement example of noise microphones, etc., in the noise reduction device according to yet another embodiment of the present disclosure.

FIG. 20A illustrates an arrangement example of noise microphones, etc., in the noise reduction device according to yet another embodiment of the present disclosure.

FIG. 20B illustrates an arrangement example of noise microphones, etc., in the noise reduction device according to yet another embodiment of the present disclosure.

FIG. 21 illustrates an arrangement example of noise microphones, etc., in the noise reduction device according to yet another embodiment of the present disclosure.

FIG. 22 is a block diagram of the configuration of the noise reduction device according to yet another embodiment of the present disclosure.

FIG. 23A illustrates an arrangement example of noise microphones, etc., in the noise reduction device according to yet another embodiment of the present disclosure.

FIG. 23B illustrates an arrangement example of noise microphones, etc., in the noise reduction device according to yet another embodiment of the present disclosure.

FIG. 24A illustrates an arrangement example of noise microphones, etc., in the noise reduction device according to yet another embodiment of the present disclosure.

FIG. 24B illustrates an arrangement example of noise microphones, etc., in the noise reduction device according to yet another embodiment of the present disclosure.

FIG. 25A illustrates an arrangement example of noise microphones, etc., in the noise reduction device according to yet another embodiment of the present disclosure.

FIG. 25B illustrates an arrangement example of noise microphones, etc., in the noise reduction device according to yet another embodiment of the present disclosure.

FIG. 25C illustrates an arrangement example of noise microphones, etc., in the noise reduction device according to yet another embodiment of the present disclosure.

FIG. 26 illustrates an arrangement example of noise microphones, etc., in the noise reduction device according to yet another embodiment of the present disclosure.

FIG. 27A illustrates an arrangement example of noise microphones, etc., in the noise reduction device according to yet another embodiment of the present disclosure.

FIG. 27B illustrates an arrangement example of noise microphones, etc., in the noise reduction device according to yet another embodiment of the present disclosure.

FIG. 28A illustrates the occiput-tragus distance of a person.

FIG. 28B illustrates the parietal-tragus distance of a person.

FIG. 29 illustrates an arrangement example of noise microphones, etc., in the noise reduction device according to yet another embodiment of the present disclosure.

FIG. 30A illustrates an arrangement example of speakers in the noise reduction device according to yet another embodiment of the present disclosure.

FIG. 30B illustrates an arrangement example of speakers in the noise reduction device according to yet another embodiment of the present disclosure.

FIG. 30C illustrates an arrangement example of speakers in the noise reduction device according to yet another embodiment of the present disclosure.

FIG. 30D illustrates an arrangement example of speakers in the noise reduction device according to yet another embodiment of the present disclosure.

FIG. 31 illustrates an arrangement example of noise microphones, etc., in the noise reduction device according to yet another embodiment of the present disclosure.

FIG. 32 illustrates an arrangement example of noise microphones, etc., in the noise reduction device according to yet another embodiment of the present disclosure.

FIG. 33 illustrates an arrangement example of noise microphones, etc., in the noise reduction device according to yet another embodiment of the present disclosure.

FIG. 34 illustrates an arrangement example of noise microphones, etc., in the noise reduction device according to yet another embodiment of the present disclosure.

FIG. 35 illustrates an arrangement example of noise microphones, etc., in the noise reduction device according to yet another embodiment of the present disclosure.

FIG. 36A illustrates an arrangement example of noise microphones, etc., in the noise reduction device according to yet another embodiment of the present disclosure.

FIG. 36B illustrates an arrangement example of noise microphones, etc., in the noise reduction device according to yet another embodiment of the present disclosure.

FIG. 37 illustrates an arrangement example of noise microphones, etc., in the noise reduction device according to yet another embodiment of the present disclosure.

FIG. 38 illustrates an arrangement example of noise microphones, etc., in the noise reduction device according to yet another embodiment of the present disclosure.

FIG. 39A illustrates an arrangement example of noise microphones, etc., in the noise reduction device according to yet another embodiment of the present disclosure.

FIG. 39B illustrates an arrangement example of noise microphones, etc., in the noise reduction device according to yet another embodiment of the present disclosure.

FIG. 39C illustrates an arrangement example of noise microphones, etc., in the noise reduction device according to yet another embodiment of the present disclosure.

FIG. 39D illustrates an arrangement example of noise microphones, etc., in the noise reduction device according to yet another embodiment of the present disclosure.

FIG. 39E illustrates an arrangement example of noise microphones, etc., in the noise reduction device according to yet another embodiment of the present disclosure.

FIG. 40A illustrates an arrangement example of noise microphones, etc., in the noise reduction device according to yet another embodiment of the present disclosure.

FIG. 40B illustrates an arrangement example of noise microphones, etc., in the noise reduction device according to yet another embodiment of the present disclosure.

FIG. 40C illustrates an arrangement example of noise microphones, etc., in the noise reduction device according to yet another embodiment of the present disclosure.

FIG. 41 illustrates an arrangement example of noise microphones, etc., in the noise reduction device according to yet another embodiment of the present disclosure.

FIG. 42A illustrates an arrangement example of noise microphones, etc., in the noise reduction device according to yet another embodiment of the present disclosure.

FIG. 42B illustrates an arrangement example of noise microphones, etc., in the noise reduction device according to yet another embodiment of the present disclosure.

FIG. 43A illustrates an arrangement example of noise microphones, etc., in the noise reduction device according to yet another embodiment of the present disclosure.

FIG. 43B illustrates an arrangement example of noise microphones, etc., in the noise reduction device according to yet another embodiment of the present disclosure.

DESCRIPTION OF EXEMPLARY EMBODIMENTS

Hereinafter, embodiments will be described in detail with reference to the attached drawings, but unnecessarily detailed descriptions may be omitted. For example, detailed descriptions of well-known matters or descriptions of components that are substantially the same as previously described components may be omitted. This is to avoid redundancy and provide easily read descriptions for those skilled in the art.

Note that the attached drawings and the subsequent description are provided so that a person having ordinary skill in the art is able to sufficiently understand the present disclosure, and are not intended to limit the scope of the subject matter recited in the Claims.

EMBODIMENT 1

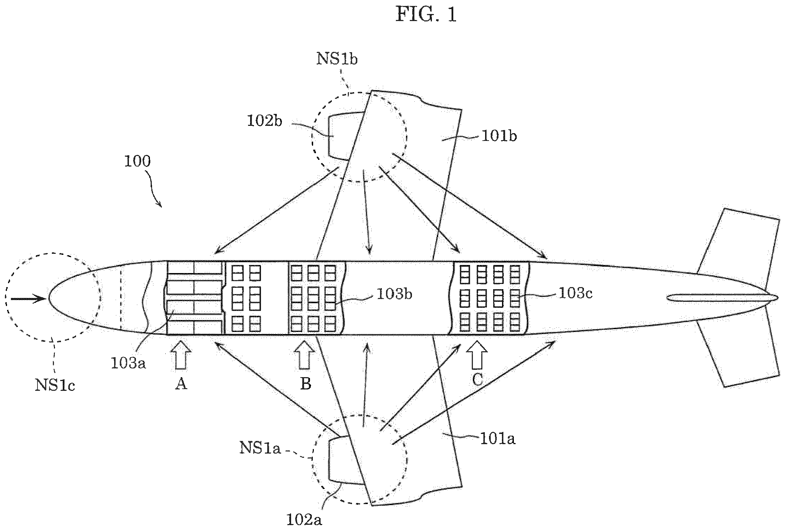

A device according to one embodiment of the present disclosure is described as follows with reference to FIG. 1 through FIG. 7.

Hereinafter, a noise reduction device according to this embodiment will be described by way of an example in which the noise reduction device is installed in aircraft 100.

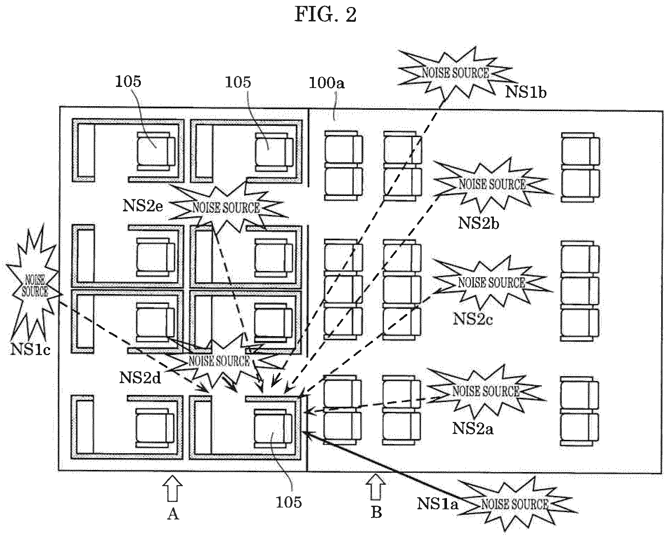

First, the noise environment in aircraft 100 in which the noise reduction device is installed will be described with reference to FIG. 1 and FIG. 2.

FIG. 1 is a plan view illustrating the environment in which the noise reduction device according to this embodiment is installed (i.e., in aircraft 100).

As illustrated in FIG. 1, aircraft 100 includes left and right wings 101a and 101b, respectively, and engines 102a and 102b provided on wings 101a and 101b, respectively.

Considering the space inside aircraft 100 as a noise environment, sound emitted from engines 102a and 102b includes not only revving sound, but also, for example, echoes of the flow of air during flight, and therefore engines 102a and 102b are important sources of noise.

Engines 102a and 102b act as noise sources NS1a and NSlb for, for example, seat rows 103a, 103b, and 103c located in cabin A (for example, the first class cabin), cabin B (for example, the business class cabin), and cabin C (for example, the economy class cabin), respectively, inside the aircraft. The sound of the flow of air (wind noise) colliding with the front end of the airframe and wings 101a and 101b, generated when the airframe moves through air space at high speed, also creates noise inside aircraft 100 as noise source NS1c, having an adverse effect on, for example, information providing services inside aircraft 100.

FIG. 2 is a plan view illustrating the installation environment of the noise reduction device in detail, and depicts an enlarged view of the arrangement of seats in part of cabin A and cabin B in FIG. 1.

Cabin 100a is partitioned into cabins A and B by walls. Cabin A includes seat row 103a, and cabin B includes seat row 103b.

The sound environment inside cabin 100a includes, as external noise sources, noise sources NS1a and NS1b corresponding to engines 102a and 102b, respectively, and wind noise from the front end of the airframe (noise source NS1c). The sound environment inside cabin 100a also includes, as internal noise sources, noise sources NS2a to NS2e corresponding to, for example, air conditioners.

When noise generated by these noise sources is considered from the perspective of one seat 105 in cabin A, seat 105 is affected by noise from noise sources NS1a through NS1c corresponding to engines 102a and 102b attached to the wings on the other side of the windows (see FIG. 1) and the sound of airflow, and noise sources NS2a through NS2e corresponding to air conditioners.

In particular, in the first class cabin indicated as cabin A in FIG. 1, for example, seat 105 is surrounded by a shell structure. Audio-visual devices, such as a television or radio, for providing entertainment such as movies and music, a desk for a business person, a power supply for PC connection, etc., are provided in the area surrounded by the shell structure. Thus, it is highly desired that seat 105 provide a passenger using seat 105 with an environment in which the passenger can relax or concentrate on business matters. Accordingly, there is a high demand in particular for reduced noise within the shell structure.

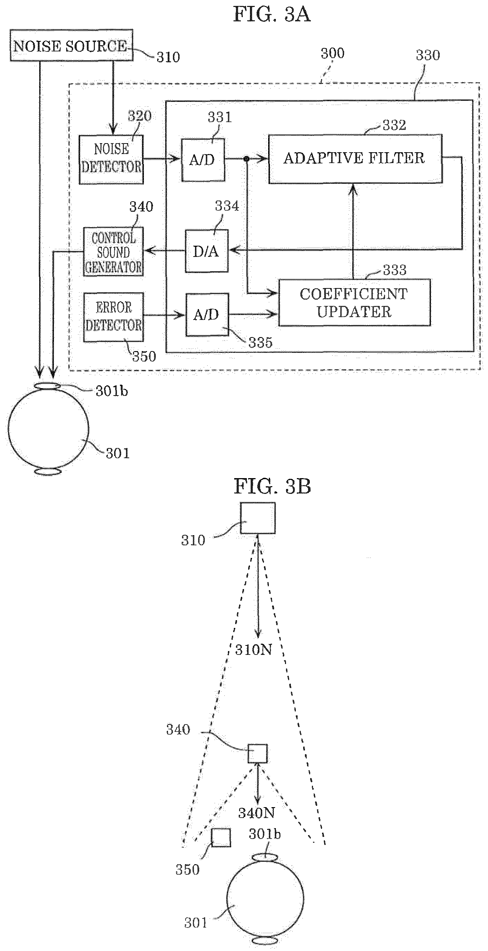

FIG. 3A is a block diagram illustrating the basic configuration of the noise reduction device according to this embodiment.

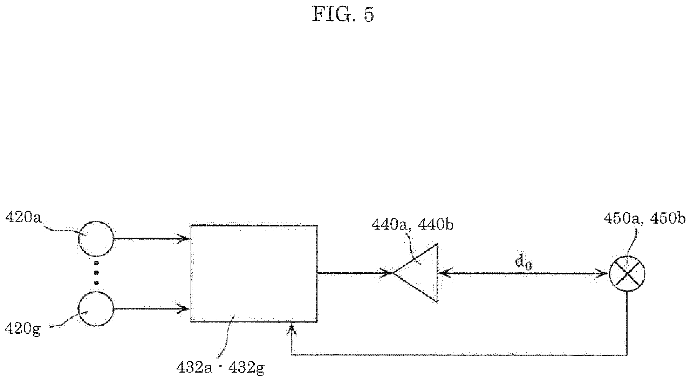

Noise reduction device 300 is a feedforward noise reduction device (see FIG. 5), and includes noise detector 320, noise controller 330, control sound generator 340, and error detector 350, as illustrated in FIG. 3A.

Hereinafter, each element and function thereof will be described.

Noise detector 320 is a microphone that detects noise (hereinafter referred to as a noise microphone) generated by noise source 310, converts the detected noise information into an electric signal, and outputs the electric signal.

Error detector 350 is a microphone (hereinafter referred to as an error microphone) that detects residual sound (error sound) that remains as a result of noise generated by noise source 310 and control sound from control sound generator 340 being superimposed on each other, converts the error sound into an electric signal, and outputs the electric signal.

Noise controller 330 includes A/D converters 331 and 335, adaptive filter 332, coefficient updater 333, and D/A converter 334, as illustrated in FIG. 3A. Based on noise information from noise detector 320 and error information from error detector 350, noise controller 330 generates a control sound signal so as to minimize the detected error.

Control sound generator 340 is a speaker that converts the control sound signal received from D/A converter 334 into sound waves and outputs the sound waves, and generates an inverted phase control sound that cancels out noise that reaches the vicinity of ear 301b of user 301.

Adaptive filter 332 is a finite impulse response (FIR) filter including more than one tap, and the filter coefficient for each tap can be freely set.

In addition to information output from noise detector 320, coefficient updater 333 also receives an input of a detected error signal from error detector 350 via A/D converter 335. Subsequently, coefficient updater 333 adjusts each filter coefficient of adaptive filter 332 so that the detected error is minimized. In other words, at the installation location of error detector 350, a control sound signal having a phase that is opposite the phase of the noise from noise source 310 is generated and output to control sound generator 340 via D/A converter 334.

A/D converter 331 converts the noise signal from noise detector 320 from analog to digital, and outputs the result to adaptive filter 332 and coefficient updater 333.

Error detector 350 detects post-noise-reduction sound as an error, and provides feedback on the operation result of noise reduction device 300. This makes it possible to constantly minimize noise proximate an ear of a user, even when, for example, there are changes in the noise environment.

With noise reduction device 300 according to this embodiment, noise detector 320 detects noise generated by noise source 310, as illustrated in FIG. 3A. Subsequently, in noise reduction device 300, noise controller 330 performs signal processing, control sound generator 340 outputs control sound, and noise generated by noise source 310 and control sound having an inverted phase are superimposed, and the result is emitted to ear 301b of user 301. This makes it possible to reduce noise since the noise and the inverted phase control sound cancel each other out.

FIG. 3B illustrates a method of superimposing the control sound generated by control sound generator 340 with the noise generated by noise source 310.

As illustrated in FIG. 3B, control sound generator 340 is disposed on main arrival path 310N of noise that connects noise source 310 and ear 301b of user 301.

With this, since the control sound from control sound generator 340 having an inverted phase relative to the noise is emitted along main arrival path 340N, the noise and control sound are superimposed before reaching ear 301b of user 301. Moreover, by arranging error detector 350 in the region in which superimposition occurs, error detector 350 can improve the noise reduction effect by detecting post-noise-reduction sound as an error and providing feedback on the operation result of noise reduction device 300.

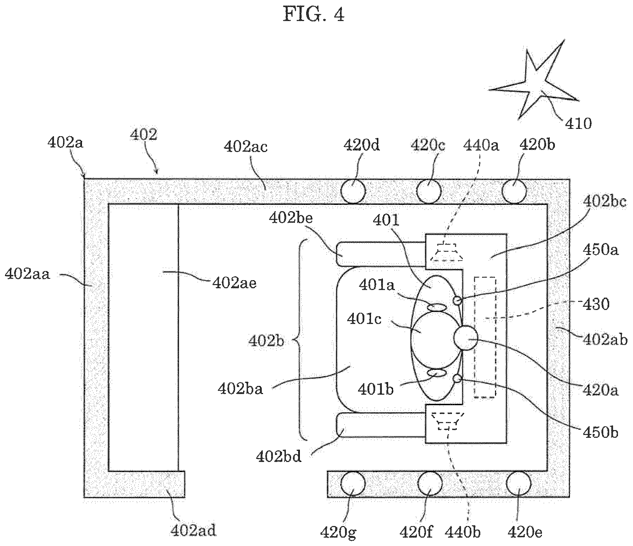

Next, an example in which the noise reduction device according to this embodiment is installed in a cabin of an aircraft will be given with reference to FIG. 4 and FIG. 5. FIG. 4 is a plan view illustrating main elements of the noise reduction device installed in the cabin of an aircraft. FIG. 5 is a block diagram illustrating the basic configuration of the feedforward noise reduction device corresponding to FIG. 4.

As illustrated in FIG. 4, the noise reduction device is installed in seat 402 in cabin A (FIG. 1) of an aircraft. Here, seat 402 is a control space for controlling noise.

Seat 402 includes shell 402a that surrounds an area via a shell-shaped wall so as to establish a region occupied by a user, and chair 402b disposed within the area delimited by shell 402a.

Shell 402a includes front wall 402aa, rear wall 402ab, side wall 402ac, and side wall 402ad that surround the area on four sides.

Side wall 402ad includes an opening for passengers to enter and exit shell 402a.

Shell 402a includes shelf 402ae in a position forward of chair 402b and surrounded by front wall 402aa, side wall 402ac, and side wall 402ad. Shelf 402ae is used as a desk.

Chair 402b includes a backrest (not illustrated in the drawings), chair seat 402ba on which user 401 sits, headrest 402bc, and armrests 402bd and 402be. Noise controller 430 (corresponding to noise controller 330 illustrated in FIG. 3A) is provided inside the backrest of chair 402b.

Noise sources in the sound environment in cabin A of the aircraft include engines 102a and 102b mounted to the airframe and air conditioners installed inside the cabin. Then, in the vicinity of seat 402, noise from the various noise sources reaches the area surrounding shell 402a.

As illustrated in FIG. 4, with seat 402, sound isolation is achieved by physical means using shell 402a that surrounds seat 402 to insulate noise from the external noise source 410. Moreover, noise from noise source 410 that enters the area surrounded by shell 402a reaches the vicinity of head 401c of user 401 sitting in chair 402b.

Note that when there are various noise sources such as inside an aircraft and the main noise path cannot be identified, more than one omnidirectional noise microphone is provided on or proximate shell 402a (the control space).

FIG. 4 illustrates an example in which noise microphones 420a through 420g (each corresponding to noise detector 320 in FIG. 3A) are arranged in predetermined locations on shell 402a, and control speakers 440a and 440b (each corresponding to control sound generator 340 in FIG. 3A) and error microphones 450a and 450b (each corresponding to error detector 350 in FIG. 3A) are provided in the chair.

With the noise reduction device according to this embodiment, as illustrated in FIG. 4, the area surrounded by shell 402a is defined as the control space for seat 402, and error microphones 450a and 450b installed proximate ears 401a and 401b of user 401 sitting in chair 402b are each defined as a center of control.

As illustrated in FIG. 5, with this noise reduction device, a feedforward technique is adopted in which noise is detected by noise microphones 420a through 420g, and before noise reaches error microphones 450a and 450b functioning as centers of control, control sound whose phase is inverted relative to the noise is output from control speakers 440a and 440b to reduce the noise.

Moreover, with the noise reduction device according to this embodiment, as illustrated in FIG. 4, noise microphone 420a (second noise detector) is disposed closer to a center of control, that is, to error microphone 450a or 450b than the other noise microphones 420b through 420g (first noise detectors). More specifically, noise microphone 420a is disposed proximate headrest 402bc in seat 402.

The other noise microphones 420b through 420g are attached to side walls 402ac and 402ad covering the sides of seat 402 among shell 402a surrounding seat 402.

Stated differently, in this embodiment, in order to efficiently implement processing for reducing noise that reaches ears 401a and 401b of user 401 sitting in seat 402, one noise microphone 420a is disposed within the area surrounded by shell 402a and six noise microphones 420b through 420g are arranged on side walls 402ac and 402ad of shell 402a that surrounds seat 402.

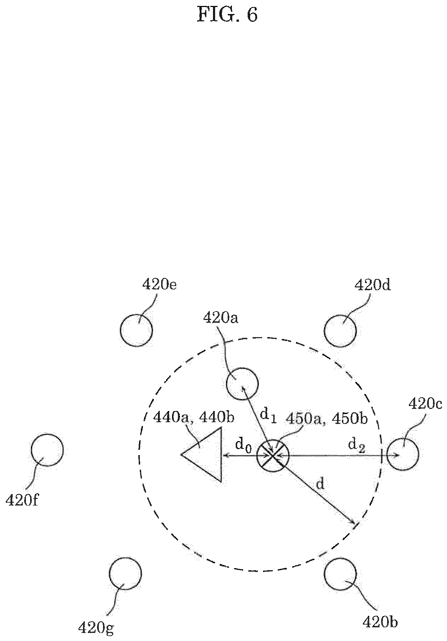

Next, with reference to FIG. 6, the positions in which noise microphones 420a through 420g are arranged will be described in relation to distance from a center of control.

In other words, with the noise reduction device according to this embodiment, among the seven noise microphones 420a through 420g, only noise microphone 420a is disposed proximate a center of control (error microphone 450a or 450b).

More specifically, as illustrated in FIG. 6, noise microphone 420a is disposed in a location that satisfies relational expressions (1) and (2) below, where d0 is the distance from a center of control (error microphone 450a or 450b) to control speakers 440a and 440b, and d1 is the distance from a center of control to noise microphone 420a.

$$d = d0 + t \times v - \lambda / 2 \quad (1)$$

$$d1 < d \quad (2)$$

Note that t is the control delay time in the control speaker, v is sound velocity, and $\lambda$ is wavelength corresponding to control upper limit frequency f. Here, the control delay time in the speaker corresponds to the total delay for noise controller 330 and control sound generator 340 in FIG. 3A.

Noise microphones 420b through 420g are disposed in locations that satisfy relational expression (3), where d2 is the distance from a center of control to noise microphones 420b through 420g.

$$d2 > d \quad (3)$$

In other words, with the noise reduction device according to this embodiment, as illustrated in FIG. 6, noise microphone 420a is disposed closer than distance d from a center of control (denoted by the dashed circle line), and noise microphones 420b through 420g are disposed outside the dashed circle line.

Here, since the law of causality is typically not satisfied when the noise microphones are disposed only in locations proximate a center of control, sound in a low frequency band (for example, no higher than 300 Hz) is only somewhat cancelled out.

Conversely, since the law of causality is satisfied when the noise microphones are disposed only in locations far from a center of control, the noise reduction effect can be achieved across a wide frequency band. However, the correlation between noise detected by the noise microphones and noise that reaches a center of control diminishes, whereby the amount of noise reduced decreases.

In view of this, with the noise reduction device according to this embodiment, the noise microphones are disposed in locations both less than and farther than distance d from a center of control. The number of noise microphones disposed closer than distance d (420a; one) is less than the number of noise microphones disposed farther than distance d (420b through 420g; six).

This makes it possible to achieve a noise reduction effect across a wide frequency band since mechanisms that satisfy the law of causality and mechanisms that strengthens correlation are both at work.

Typically, less noise microphones are required to achieve the same correlation if they are disposed closer to a center of control rather than farther from a center of control. Since the amount of noise reduction is determined by this correlation, by using less closely placed noise microphones than far placed noise microphones, it is possible to reduce costs, make the control signal processing less complicated, and achieve a noise reduction effect over a wide frequency band using a fewer number of total noise microphones.

More specifically, with the noise reduction device according to this embodiment, noise microphones 420a through 420g are arranged so as to satisfy relational expressions (1) through (3) described above.

This satisfies the law of causality in noise reduction control and makes it possible to maintain a high correlation between noise detected by noise microphones 420a through 420g and noise that actually reaches the vicinity of an ear of user 401. With the configuration described above, it is possible to effectively reduce noise in a frequency band ranging from low to high frequencies even when noise comes from various directions or there are many noise sources, as exemplified by the inside of a cabin of aircraft 100.

The noise reduction effect achieved by the noise reduction device according to this embodiment will be described along with results of verifications performed in the following implementation example, using a comparative example.

Here, noise microphones 420b through 420g disposed farther than distance d from a center of control may be used explicitly for high frequencies, and noise microphone 420a disposed closer than distance d may be used explicitly for low frequencies.

However, in this embodiment, the filter response for adaptive filters 432a through 432g is configured as a filter that automatically primarily reduces low frequency noise for the nearby noise microphone 420a.

Accordingly, the same wide-band microphones can be used for all noise microphones 420a and 420g disposed both closer and farther than distance d.

Stated differently, in actual usage, f1 < f2, where f1 is the control upper limit frequency in the low frequency noise microphone 420a and f2 is the control upper limit frequency in the high frequency noise microphones 420b through 420g.

Note that the control upper limit frequency for noise microphone 420a disposed closer than distance d is, for example, 300 Hz or less.

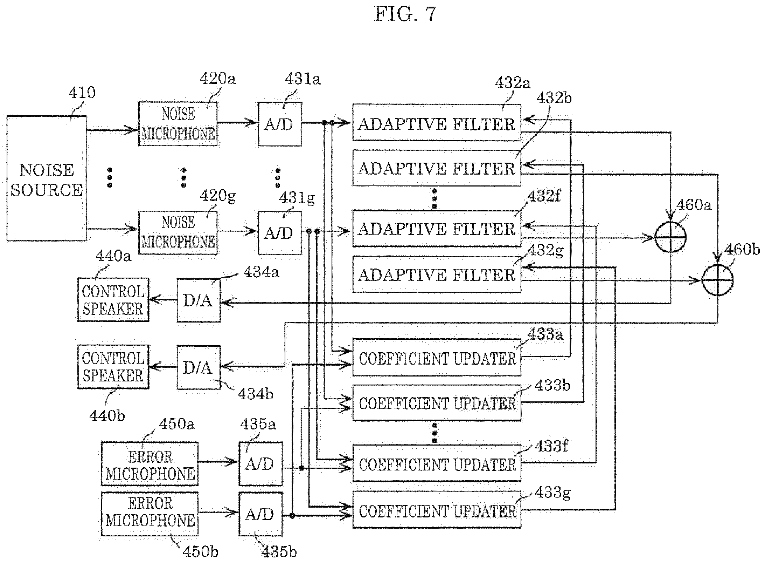

Next, the noise reduction device according to this embodiment, as described above, includes noise microphones 420a through 420g, control speakers 440a and 440b, and error microphones 450a and 450b. Accordingly, the actual control block diagram is not the simplified version illustrated in FIG. 3A, but rather the one illustrated in FIG. 7.

Note that noise microphones 420a through 420g, A/D converters 431a through 431g, adaptive filters 432a through 432g, coefficient updaters 433a through 433g, D/A converters 434a and 434b, A/D converters 435a and 435b, control speakers 440a and 440b, error microphones 450a and 450b correspond, respectively, to noise detector 320, A/D converter 331, adaptive filter 332, coefficient updater 333, D/A converter 334, A/D converter 335, control sound generator 340, and error detector 350 illustrated in FIG. 3A. Accordingly, detailed description of the functions of these will be omitted.

In the noise reduction device according to this embodiment, noise generated by noise source 410 is detected by noise microphones 420a through 420g. The noise detected by noise microphones 420a through 420g is converted into digital signals by A/D converters 431a through 431g and then input to adaptive filters 432a through 432g.

The filter coefficients of adaptive filters 432a through 432g are adjusted by coefficient updaters 433a through 433g so that the errors detected by error microphones 450a and 450b are minimized.

The outputs from adaptive filters 432a through 432g are added together by adders 460a and 460b, transmitted to control speakers 440a and 440b via D/A converters 434a and 434b, and output as control sound.

The noise-reduction processed sound detected by error microphones 450a and 450b is converted into digital signals by A/D converters 435a and 435b and subsequently transmitted by coefficient updaters 433a through 433g which adjust the filter coefficients of adaptive filters 432a through 432g.

With the configuration described above, it is possible to effectively reduce noise in a frequency band ranging from low to high frequencies even when noise comes from various directions or there are many noise sources, as exemplified by the inside of a cabin of aircraft 100, even with a configuration including noise microphones 420a through 420g, control speakers 440a and 440b, and error microphones 450a and 450b.

<Implementation Example>

The noise reduction effect achieved by the noise reduction device according to the above-described embodiment is as described below with reference to a comparative example.

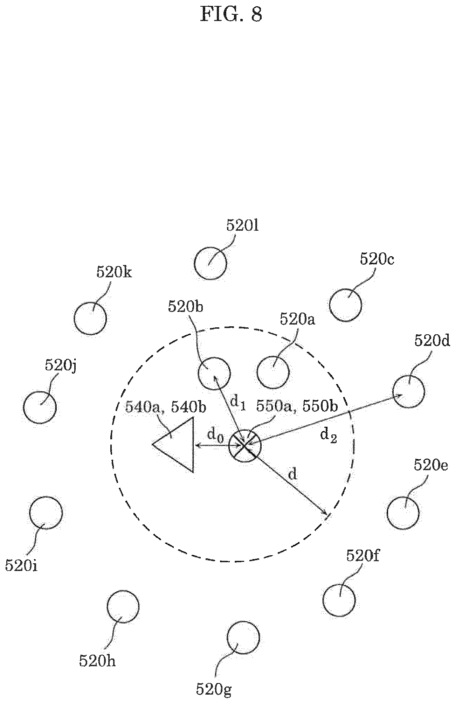

In this implementation example, as illustrated in FIG. 8, the noise reduction effect was verified using a noise reduction device including twelve noise microphones 520a through 520l, two control speakers 540a and 540b, and two error microphones 550a and 550b each functioning as a center of control.

Here, as described above, control speakers 540a and 540b are disposed at a distance d0 from a center of control (error microphone 550a or 550b).

Noise microphones (first noise detector) 520a and 520b are disposed within the dashed circle line illustrated in FIG. 8 so that their distances d1 from a center of control (error microphone 550a or 550b) are less than distance d determined according to relational expression (1) described above and shown below.

Conversely, noise microphones (second noise detector) 520c through 520l are disposed outside the dashed circle line illustrated in FIG. 8 so that their distances d2 from a center of control (error microphone 550a or 550b) are greater than distance d determined according to relational expression (1) described above and shown below.

$$d = d0 + t \times v - \lambda / 2 \quad (1)$$

In other words, in this implementation example, noise microphones 520a through 520l are arranged so as to satisfy relational expressions (2) and (3) described above (i.e., d1 < d and d2 > d).

Next, the noise reduction effect of this implementation example will be verified and comparative examples 1 and 2 will be described.

(Comparative Example 1)

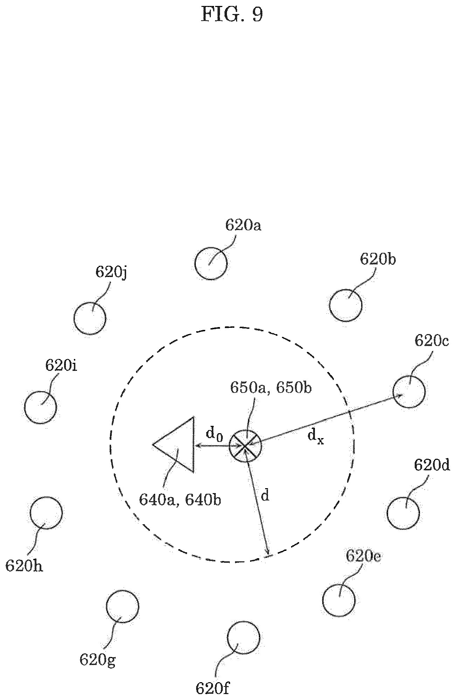

In this comparative example, as illustrated in FIG. 9, the noise reduction effect was verified using a noise reduction device including ten noise microphones 620a through 620j, two control speakers 640a and 640b, and two error microphones 650a and 650b each functioning as a center of control.

Here, as described above, control speakers 640a and 640b are disposed at a distance d0 from a center of control (error microphone 650a or 650b).

In this comparative example, all ten noise microphones 620a through 620j are disposed outside the dashed circle line illustrated in FIG. 9 so that their distances dx from a center of control (error microphone 650a or 650b) are greater than distance d determined according to relational expression (1) described above and shown below.

$$d = d0 + t \times v - \lambda / 2 \quad (1)$$

In other words, in this comparative example, noise microphones 620a through 620j are arranged so as to satisfy dx > d.

(Comparative Example 2)

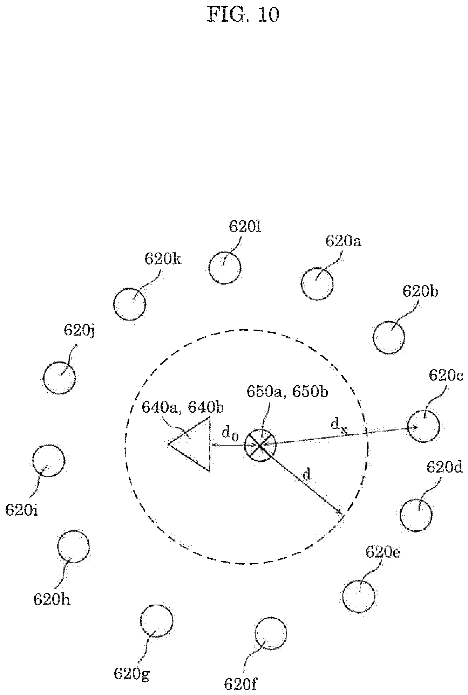

In this comparative example, as illustrated in FIG. 10, the noise reduction effect was verified using a noise reduction device including twelve noise microphones 620a through 620l, two control speakers 640a and 640b, and two error microphones 650a and 650b each functioning as a center of control.

Here, as described above, control speakers 640a and 640b are disposed at a distance d0 from a center of control (error microphone 650a or 650b).

In this comparative example, all twelve noise microphones 620a through 620l are disposed outside the dashed circle line illustrated in FIG. 10 so that their distances dx from a center of control (error microphone 650a or 650b) are greater than distance d determined according to relational expression (1) described above and shown below.

$$d = d0 + t \times v - \lambda / 2 \quad (1)$$

In other words, in this comparative example, noise microphones 620a through 620j are arranged so as to satisfy dx > d, just as in Comparative Example 1.

<Result of Verification of Noise Reduction Effect Achieved by Implementation Example and Comparative Examples 1 and 2>

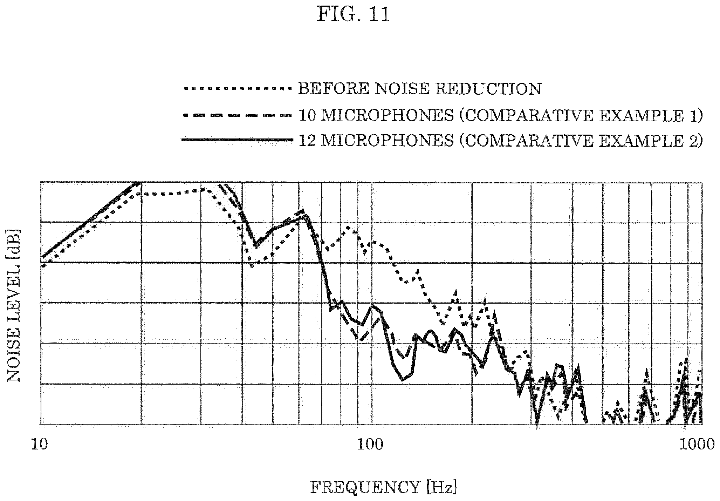

First, the result of the verification of the noise reduction effect achieved by comparative examples 1 and 2 will be described with reference to the graph illustrated in FIG. 11.

With the configuration of comparative example 1 in which ten noise microphones 620a through 620j are used, a noise reduction effect is observed in a frequency band higher than 70 Hz, and in particular, the effect is achieved in the 70 to 300 Hz range.

In contrast, with the configuration of comparative example 2 in which twelve noise microphones 620a through 620l are used, a noise reduction effect is observed in a frequency band higher than 70 Hz, and in particular, the effect is achieved in the 70 to 300 Hz range, almost exactly the same as with comparative example 1.

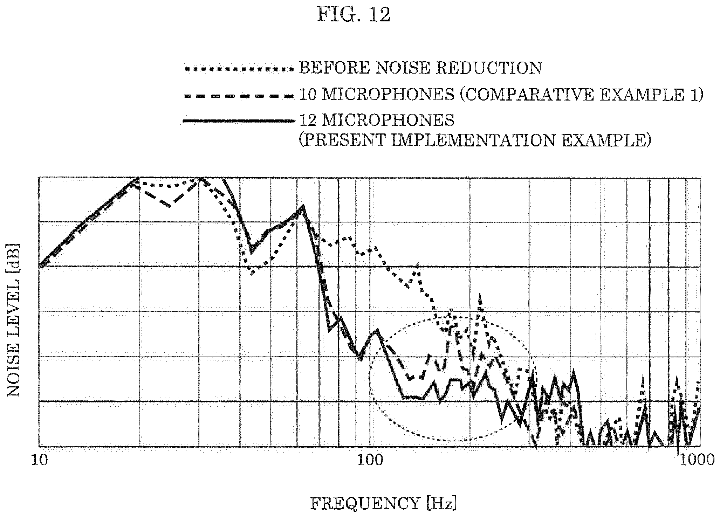

Next, the result of the verification of the noise reduction effects achieved by the implementation example and comparative example 1 will be described with reference to the graph illustrated in FIG. 12.

Comparing the result of the configuration of comparative example 1 in which ten noise microphones 620a through 620j are used with the result of the configuration of implementation example, it can be seen that there is a noise reduction effect in the 70 to 300 Hz range in both examples.

However, in the 100 to 300 Hz range in particular, the noise reduction effect is greater in the implementation example than comparative example 1.

This is believed to be due to only some of the noise microphones, namely noise microphones 520a and 520b, being disposed closer than distance d from a center of control in the implementation example, rather than all of the noise microphones 520a through 520l being disposed farther than distance d from a center of control.

Stated differently, with the configuration used in the implementation example, using distance d from a center of control as a reference, two noise microphones 520a and 520b are disposed closer than distance d and more than two noise microphones 520c through 520l are disposed farther than distance d.

This satisfies the law of causality in noise reduction control and makes it possible to maintain a high correlation between noise detected by noise microphones 520a through 520l and noise that actually reaches the vicinity of an ear of the user. Accordingly, it is possible to effectively reduce noise in a frequency band ranging from low to high frequencies even when noise comes from various directions or there are many noise sources, as exemplified by the inside of a cabin of an aircraft.

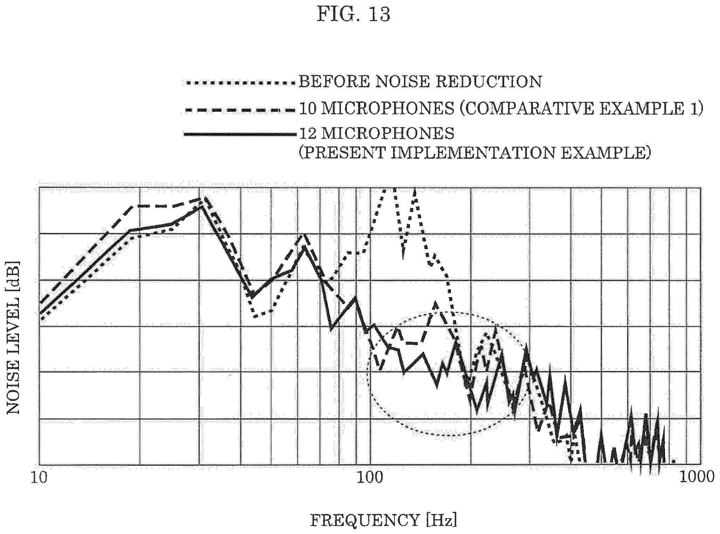

The implementation example results illustrated in the graph in FIG. 13 in which various conditions (noise source locations, presence or absence of an enclosure (shell, etc.)) were modified from the implementation used in FIG. 12 also exhibit a greater noise reduction effect than comparative example 1 in the 100 to 300 Hz range.

This shows that the configuration according to the embodiment described above provides a more effective noise reduction result than the conventional configuration.

(Other Embodiments)

Hereinbefore, Embodiment 1 was presented as an example of the techniques disclosed in the present disclosure. The techniques according to the present disclosure, however, are not limited to Embodiment 1, and can also be applied to embodiments realized by carrying out modifications, substitutions, additions, omissions, etc., as necessary. Moreover, a new embodiment can be formed by combining elements described in Embodiment 1.

Next, other embodiments will be described.

(A)

In the embodiment described above, an example was given in which the locations of noise microphone 420a and noise microphone 420b through 420g are set based on distance d set using, for example, wavelength λ corresponding to control upper limit frequency f in noise microphones 420a through 420g. However, the present disclosure is not limited to this example.

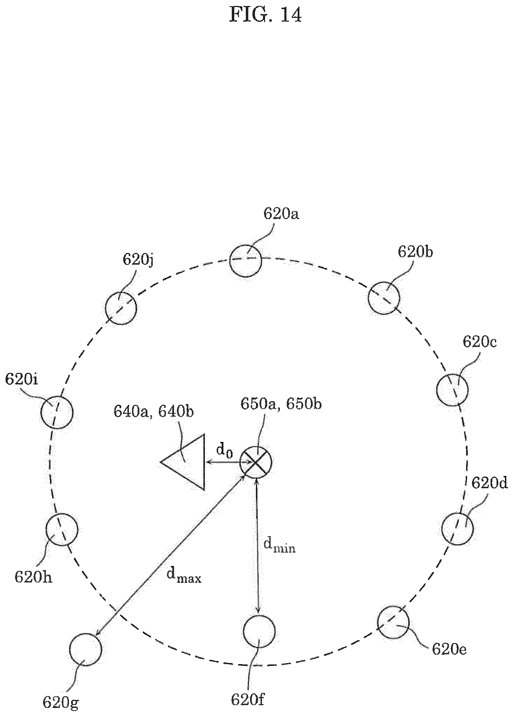

Noise reduction effect achieved when, for example, ten noise microphones 620a through 620j are arranged at approximately equal distances from error microphones 650a and 650b each functioning as a center of control, as illustrated in FIG. 14, will be described.

Since the law of causality is typically not satisfied when the noise microphones are disposed only in locations proximate a center of control, sound in a low frequency band (for example, no higher than 300 Hz) is only somewhat cancelled out.

Conversely, since the law of causality is satisfied when the noise microphones are disposed only in locations far from a center of control, the noise reduction effect can be achieved across a wide frequency band. However, the correlation between noise detected by the noise microphones and noise that reaches a center of control diminishes, whereby the amount of noise reduced decreases.

In order to improve correlation, noise microphones are preferably disposed within the range of distance da indicated in relational expression (4). However, in order to satisfy the law of causality, the distance db indicated in relational expression (5) needs to be satisfied. Accordingly, when multiple noise microphones are arranged, arranging the error microphones both within the ranges of distances da and db and so as to be at approximately equal distances achieves both the mechanism for satisfying the law of causality and the mechanism for improving causality, which results in a greater noise reduction effect.

Here, λ is the wavelength corresponding to control upper limit frequency f in noise microphones 620a through 620j, t is the control delay time in the control speaker, and v is sound velocity.

Here, the distances are "approximately equal" when relational expression (6) is satisfied, as illustrated in FIG. 14, where distance dmax is the distance from a center of control to the farthest noise microphone 620g and distance dmin is the distance from a center of control to the closest noise microphone noise microphone 620f.

$$da = d0 + t \times v - \lambda / 2 \qquad (4)$$

$$db = d0 + t \times v \qquad (5)$$

$$dmax - dmin < \lambda / 2 \qquad (6)$$

Note that when the control delay time of the speaker is unknown, relational expressions (4) and (5) cannot be used, but by arranging multiple noise microphones at approximately equal distances from a center of control (i.e., within the range defined by relational expression (6)), it is possible to effectively reduce noise with a fewer number of microphones.

Here, when the configuration according to this embodiment is applied to FIG. 4 illustrating the embodiment described above, except for noise microphone 420a, noise microphones 420b through 420g are disposed at approximately equal distances from error microphone 450a or error microphone 450b, which are centers of control.

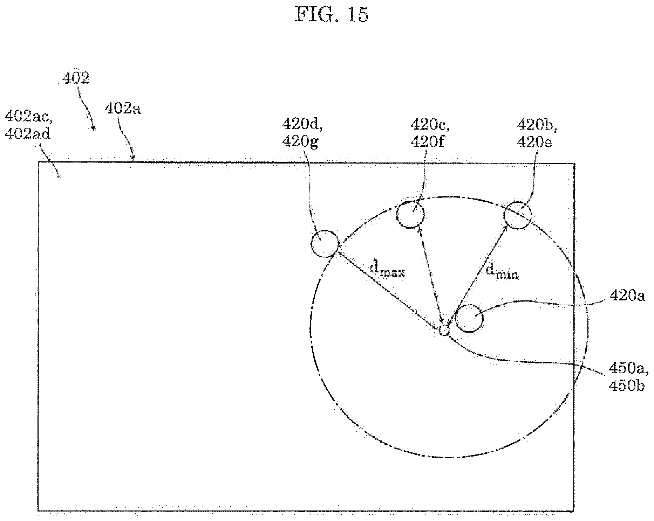

FIG. 15 is a side view of FIG. 4, and illustrates an example in which noise microphones 420b through 420d are disposed at approximately equal distances from error microphone 450a and noise microphones 420e through 420g are disposed at approximately equal distances from error microphone 450b.

In this way, when there are a plurality of centers of control, the noise microphones may be disposed at approximately equal distances to a corresponding center of control, but this example is not limiting.

For example, the middle point between error microphone 450a and error microphone 450b may be taken as a single center of control, and the noise microphones may be arranged at approximately equal distances from this single center of control, or at approximately equal distances from either one of error microphone 450a or 450b as a center of control.

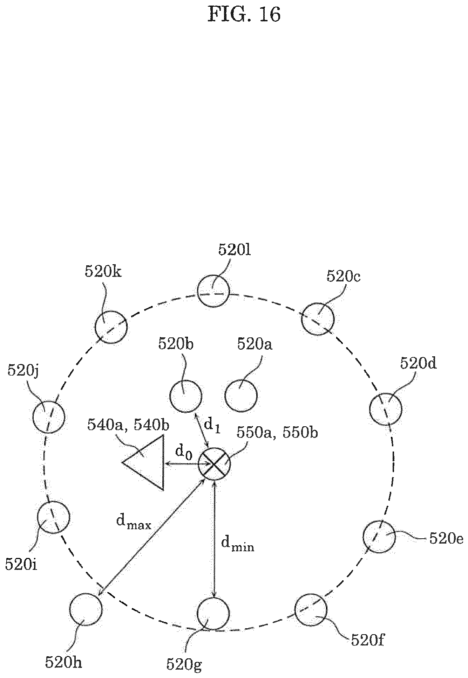

Moreover, just like in the embodiment described above, multiple noise microphones may be arranged at approximately equal distances from a center of control, and fewer number of noise microphones than those may be disposed closer to a center of control than distance dmin, as illustrated in FIG. 16.

With this, it is possible to effectively reduce noise in a frequency band ranging from low to high frequencies even when noise comes from various directions or there are many noise sources, as exemplified by the inside of a cabin of an aircraft. Note that in the configurations illustrated in FIG. 4 and FIG. 15, noise microphone 420a corresponds to the closely disposed microphone.

(B)

In embodiment (A) above, an example is given in which noise microphones 420b through 420g are arranged at approximately equal distances from a center of control, on side walls 402ac and 402ad of shell 402a installed in an aircraft, as illustrated in FIG. 4 and FIG. 5. However, the present disclosure is not limited to this example.

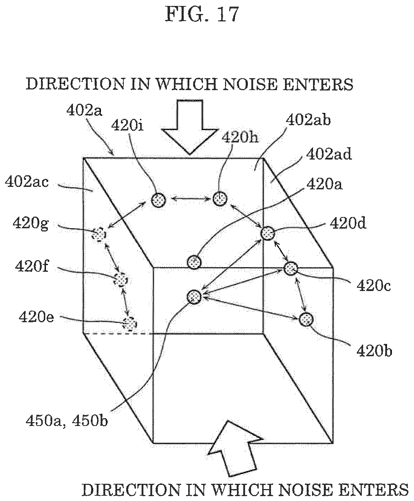

Unlike the configuration illustrated in FIG. 4, the configuration illustrated in FIG. 17 includes a shell with no front wall 402aa. This configuration is for illustrating an example in which noise primarily comes from the open front and above.

For example, in addition to noise microphones 420b through 420g attached to side walls 402ac and 402ad of shell 402a, noise microphones 420h and 420i may be provided in rear wall 402ab of shell 402a, as illustrated in FIG. 17.

Even in such cases, since each noise microphone 420b through 420i is disposed approximately the same distance from a center of control and noise microphones 420b through 420i are approximately equally spaced apart, it is possible to achieve the same noise reduction effects described above inside shell 402a that limits the directions in which noise enters to a certain degree.

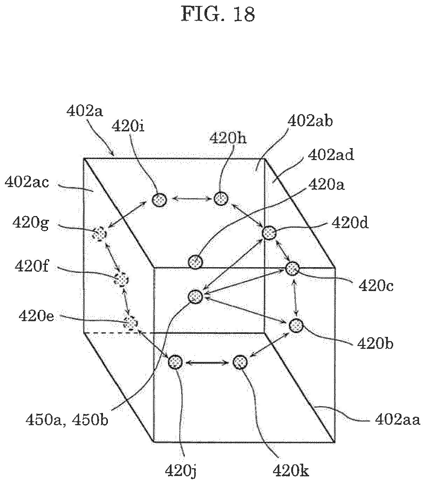

FIG. 18 illustrates an example in which front wall 402aa is added to the configuration illustrated in FIG. 17. In such cases, noise microphones 420j and 420k may be added to front wall 402aa of shell 402a.

Even in such cases, since each noise microphone 420b through 420k is disposed approximately the same distance from a center of control and noise microphones 420b through 420k are approximately equally spaced apart, it is possible to achieve the same noise reduction effects described above inside shell 402a that limits the directions in which noise enters to a certain degree.

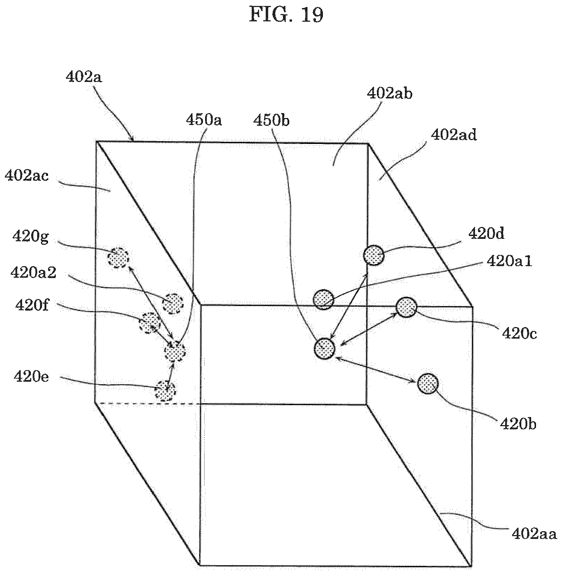

Moreover, as illustrated in FIG. 19, a plurality of error microphones 450a and 450b may be provided, and short-distance noise microphones 420a1 and 420a2 may be disposed proximate error microphones 450a and 450b, respectively.

Even in such cases, since each noise microphone 420b through 420d is disposed approximately the same distance from a center of control (error microphone 450b), each noise microphone 420e through 420g is disposed approximately the same distance from a center of control (error microphone 450a), noise microphones 420b through 420d are approximately equally spaced apart, and noise microphones 420e through 420g are approximately equally spaced apart, it is possible to achieve the same noise reduction effects described above.

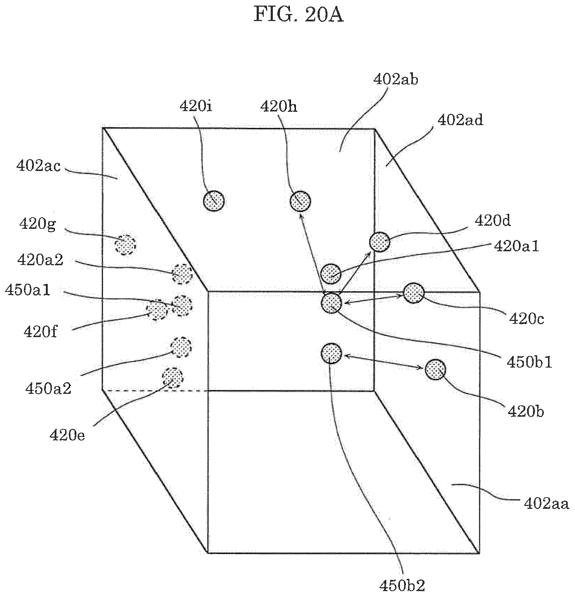

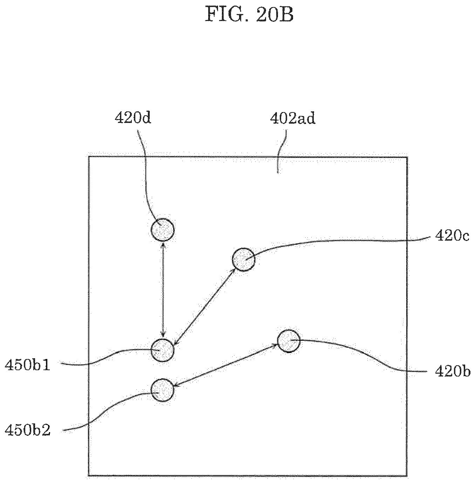

Furthermore, as illustrated in FIG. 20A and FIG. 20B, error microphones 450a1 and 450a2 may be disposed on the side wall 402ac end of the space, and error microphones 450b1 and 450b2 may be disposed on the side wall 402ad end of the space.

In such cases, regarding error microphones 450a1 and 450a2 on the side wall 402ac end of the space, noise microphones 420e through 420g may be arranged such that distances to a closer one of error microphones 450a1 and 450a2 are approximately the same, and as illustrated in FIG. 20B, regarding error microphones 450b1 and 450b2 on the side wall 402ad end of the space, noise microphones 420b through 420d may be arranged such that distances to a closer one of error microphones 450b1 and 450b2 are approximately the same.

Alternatively, the noise microphones may be arranged so as to be approximately equal in distance with reference to one error microphone per end, among error microphones 450a1 and 450a2 on the side wall 402ac end of the space and error microphones 450b1 and 450b2 on the side wall 402ad end of the space.

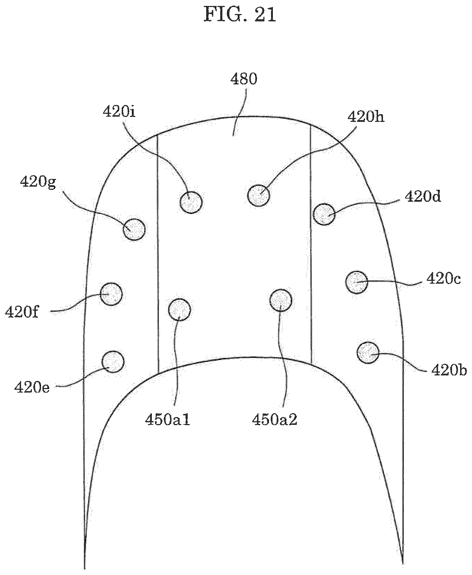

Moreover, as illustrated in FIG. 21, when a hood-shaped shell 480 is used, noise microphones 420b through 420i may be arranged at approximately equal distances from either of the two error microphones 450a1 and 450a2.

Note that in such cases, noise microphones 420b through 420i are preferably approximately equally spaced apart.

With such a configuration, it is possible to achieve a noise reduction effect in shell 480 described above.

(C)

In the embodiment described above, an example is given in which noise reduction control is implemented wherein control sound whose phase is inverted relative to noise generated by control speakers 440a and 440b does not take into consideration the effect it has on noise microphones 420a through 420g (in particular, noise microphone 420a). However, the present disclosure is not limited to this example.

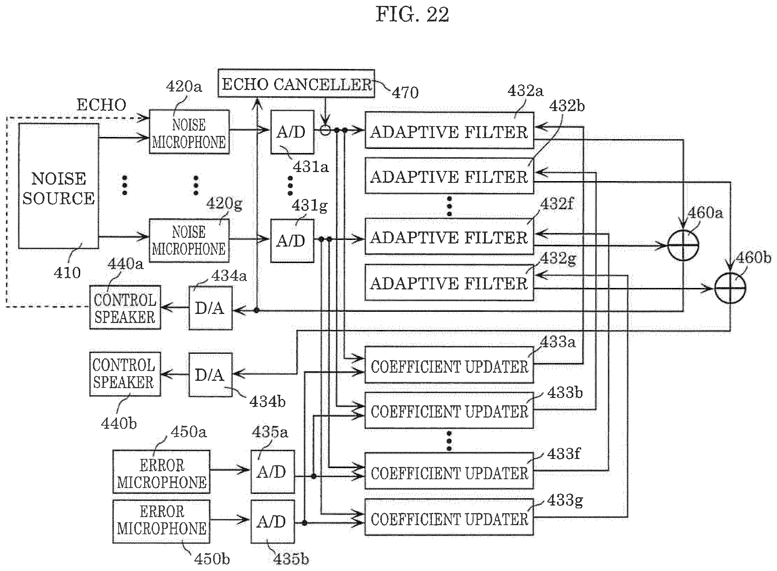

For example, as illustrated in FIG. 22, control sound whose phase is inverted relative to noise emitted by control speakers 440a and 440b is detected by noise microphones 420a through 420g, and in order to prevent inability to accurately detect actual noise, echo canceller 470 may be provided to cancel control sound from the detection results of noise microphones 420a through 420g.

As illustrated in FIG. 22, echo canceller 470 receives an echo signal of control sound emitted by control speaker 440a, and implements processing to cancel the portion of the output from noise microphone 420a that corresponds to the echo signal.

More specifically, echo canceller 470 is provided for use with the low-frequency noise microphone 420a. Moreover, in echo cancelling, echo canceller 470 calculates transfer functions in advance. A transfer function indicates a characteristic of a system up until the output from control speaker 440a is detected by noise microphone 420a. Echo canceller 470 approximates the transfer functions using an FIR filter. Next, echo canceller 470 passes the output from control speaker 440a through the FIR filter to apply the transfer functions to the output. Next, the resulting output signal is subtracted from the input for noise microphone 420a, which completes echo cancelling.

This makes it possible to cancel sound corresponding to the control sound from the noise detected by noise microphone 420a disposed close to control speaker 440a. Accordingly, even when noise microphone 420a is disposed close to control speaker 440a, noise microphone 420a is not affected by control sound, making it possible to accurately detect noise.

Note that in the configuration illustrated in FIG. 22, echo canceller 470 is provided in a position corresponding to control speaker 440a and noise microphone 420a, but echo canceller 470 may be provided in a position corresponding to all noise microphones disposed proximate a center of control (error microphone 450a or 450b)

Alternatively, the echo canceller may be provided in a position corresponding to all noise microphones, regardless of their distance from a center of control.

(D)

In the embodiment described above, an example is given in which the seven noise microphones 420a through 420g used are each the same wide-band microphone, that is to say, a mix of low-frequency microphones and high-frequency microphones is not used. However, the present invention is not limited to this example.

For example, a low pass filter (LPF) that transmits only low frequencies may be provided before the coefficient updater corresponding to the noise microphone(s) disposed closer than distance d from a center of control, and a high pass filter (HPF) that transmits only high frequencies may be provided before the coefficient updater corresponding to the noise microphone(s) disposed farther than distance d from a center of control.

With this, each noise microphone disposed closer than distance d from a center of control can be used as a low-frequency microphone, and each noise microphone disposed farther than distance d from a center of control can be used as a low-frequency microphone.

(E)

In the embodiment described above, the noise detector that detects noise is exemplified as noise microphones 420a through 420g. However, the present disclosure is not limited to this example.

For example, instead of microphones, vibration sensors may be used.

(F)

In the embodiment described above, an example is given in which the noise reduction device according to the present disclosure is installed in the cabin of aircraft 100. However, the present invention is not limited to this example.

The location in which the noise reduction device is installed is not limited to the cabin of an aircraft; for example, in order to ease the strain placed on the ears of the pilot, the noise reduction device may be installed in the cockpit of an aircraft, for example. Alternatively, the noise reduction device may be installed in a vehicle other than an aircraft, such as a helicopter, train, bus, etc. Furthermore, the installation location is not limited to a moving object such as a vehicle; the noise reduction device may be installed in a building or the like that is next to a concert hall or factory that generates noise.

Furthermore, since the foregoing embodiments are for exemplifying techniques according to the present disclosure, various changes, substitutions, additions, omissions, etc., can be carried out within the scope of the claims or its equivalents.

Since the noise reduction device according to the present disclosure can effectively reduce noise in a frequency band ranging from low to high frequencies even when noise comes from various directions or there are many noise sources, like in seats in an aircraft, the noise reduction device can be implemented in a wide variety of locations.

(G)

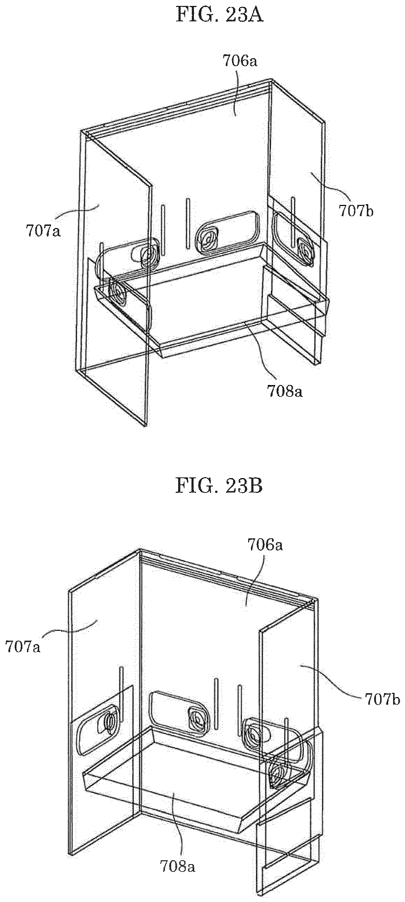

FIG. 23A and FIG. 23B illustrate examples of other embodiments according to the present disclosure, and illustrate examples in which the arrangement is varied from that of FIG. 4.

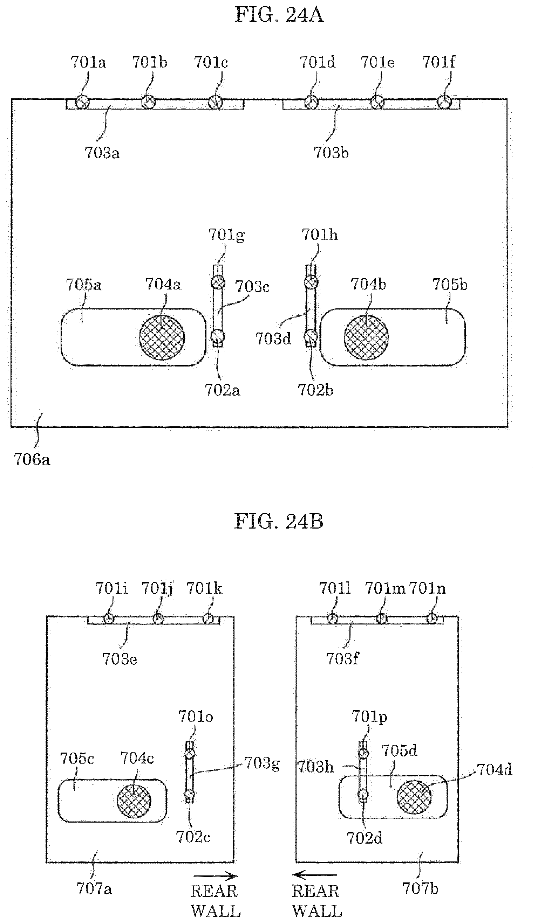

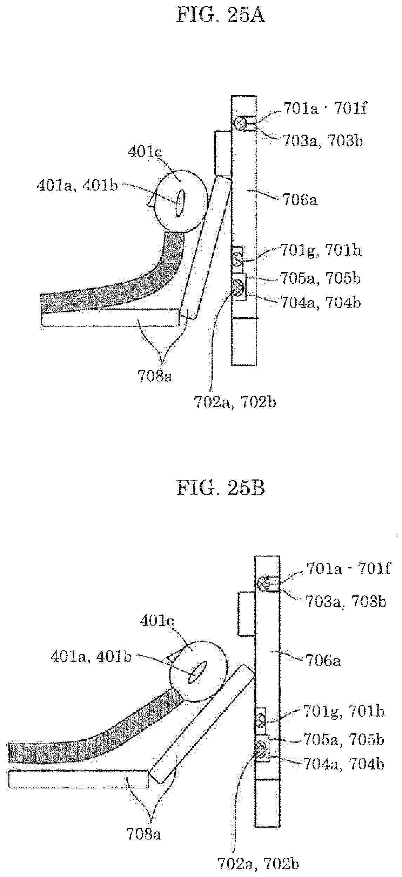

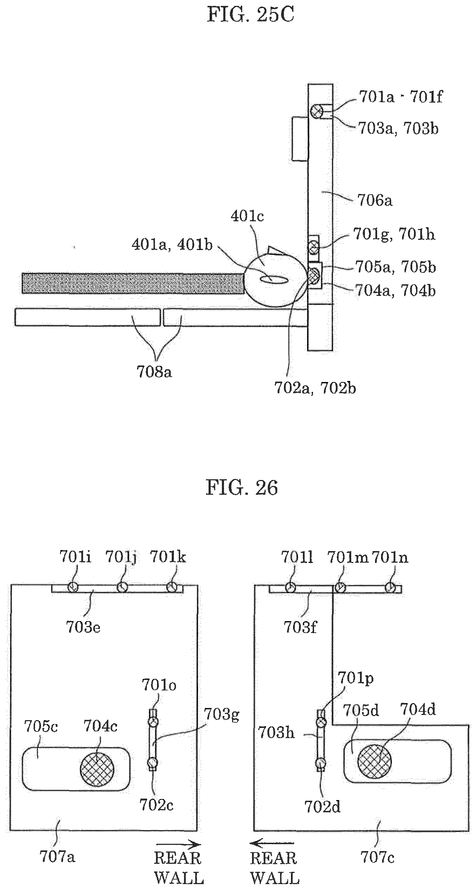

706a indicates the rear wall of the shell, 707a and 707b indicate the side walls of the shell, 708a indicates a section of a seat disposed in the area surrounded by the shell. The seat is shown completely reclined in the full flat position. When completely reclined in the full flat position, seat 708a is also called a bed. The seat is reclinable so as to be finely adjustable without steps, from a full upright position to a full flat position. Examples of positions are illustrated in FIG. 25A, FIG. 25B, and FIG. 25C. FIG. 24A and FIG. 24B illustrate rear wall 706a and side walls 707a and 707b illustrated in FIG. 23A and FIG. 23B from the front, and show an example of how speakers, noise microphones, and error microphones, etc., are arranged.

Noise microphones 701a, 701b, and 701c illustrated in FIG. 24A satisfy distance d2 in relational expression (3), where d0 is distance from speaker 704a to error microphone 702a. Moreover, noise microphone 701g satisfies distance dl in relational expression (2). Similarly, noise microphones 701d, 701e, and 701f satisfy distance d2 in relational expression (3), where d0 is distance from speaker 704b to error microphone 702b. Moreover, noise microphone 701h satisfies distance d1 in relational expression (2).

Noise microphones 701i, 701j, and 701k illustrated in FIG. 24B satisfy distance d2 in relational expression (3), where d0 is distance from speaker 704c to error microphone 702c. Moreover, noise microphone 701o satisfies distance d1 in relational expression (2). Similarly, noise microphones 7011, 701m, and 701n satisfy distance d2 in relational expression (3), where d0 is distance from speaker 704d to error microphone 702d. Moreover, noise microphone 701p satisfies distance d1 in relational expression (2).

The noise microphones and error microphones are oriented facing inward relative to the area surrounded by shell. Even if water were to be spilled, it will not easily enter the microphones, thereby increasing the reliability of the microphones.

Moreover, the upper noise microphones 701a through 701f and 701i through 701n are also disposed facing inward relative to the rear and side walls of the shell. Even if a hand was rested against the wall, the noise microphones would not be covered, thereby preventing negatively affecting the noise reduction effect.

703a through 703h are microphone cabinets to which a plurality of microphones are attached in an array. This makes it easier to attach and remove the microphones when maintenance is required, and since the cabinets hold the microphones at positions approximately equally spaced apart, it is easier to perform installation such that the collection microphones are approximately equally spaced apart.

FIG. 25A, FIG. 25B, and FIG. 25C illustrate examples of positions of the seat from the side, where FIG. 25A illustrates the most upright position, referred to as the "upright" position in this implementation example. FIG. 25C illustrates the most reclined position, referred to as the full flat position, and FIG. 25B illustrates a midway position between the positions illustrated in FIG. 25A and FIG. 25C, referred to as a "relaxing" position.

Seat 708a can be freely reclined to any angle, and can recline to the upright, relaxing, and full flat positions. In the full flat position, seat 708a functions as a bed.

The noise microphones, error microphones, and speakers are preferably embedded in the rear or side walls so as not to protrude and be obstructive when reclining the seat. In FIG. 25A, FIG. 25B, and FIG. 25C, only noise microphones 701a through 701h, error microphones 702a and 702b, and speakers 704a, 704b embedded in rear wall 706a are shown, but the noise microphones, error microphones, and speakers provided in the side walls are also preferably embedded so as not to protrude and be obstructive when reclining the seat.

FIG. 26 illustrates an example of how the speakers, microphones, etc., are arranged when a portion of side wall 707c of the shell is removed. Similar to FIG. 24B, noise microphones 701i, 701j, and 701k satisfy distance d2 in relational expression (3), where d0 is distance from speaker 704c to error microphone 702c, and moreover, noise microphone 701o satisfies distance d1 in relational expression (2). Similarly, noise microphones 701l, 701m, and 701n satisfy distance d2 in relational expression (3), where d0 is distance from speaker 704d to error microphone 702d, and moreover, noise microphone 701p satisfies distance d1 in relational expression (2).

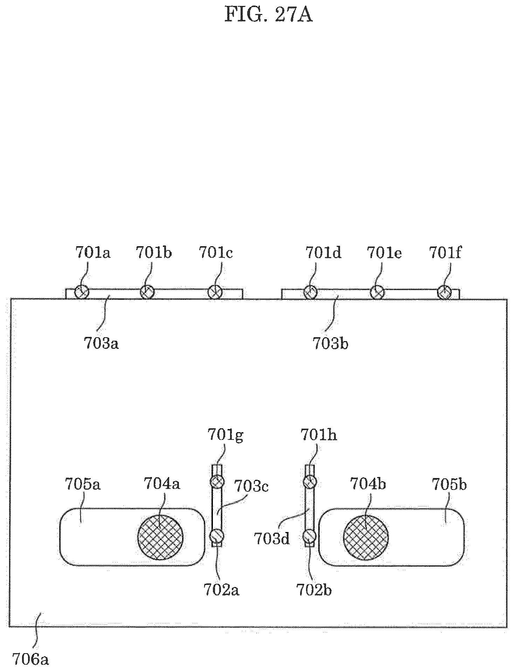

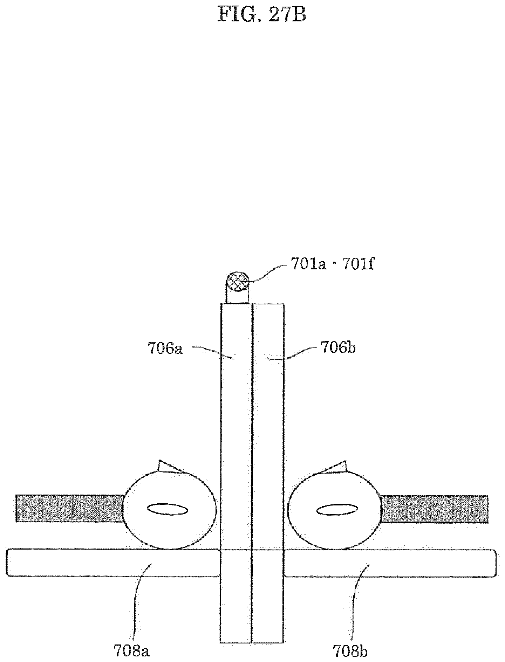

FIG. 27A illustrates an example in which noise microphones 701a through 701f are disposed on the peak of the rear wall. FIG. 27B illustrates a side view of the seat illustrated in FIG. 27A and a side view of the seat next to (behind) the seat illustrated in FIG. 27A. In such cases, noise microphones 701a through 701f can be shared between front and rear seats, as illustrated in FIG. 27B, thereby reducing the total number of noise microphones used. In FIG. 27B, 706b indicates the rear wall of the adjacent seat (rear seat), and 708b indicates the seat. Like seat 708a, seat 708b also functions as a bed when in full flat mode, and is also referred to as a bed.

Here, an example is shown in which the rear wall noise microphones are disposed on the peak, but similarly, by disposing the noise microphones on the peak of the side walls, noise microphones can be shared between left and right adjacent seats, thereby reducing the total number of noise microphones used.

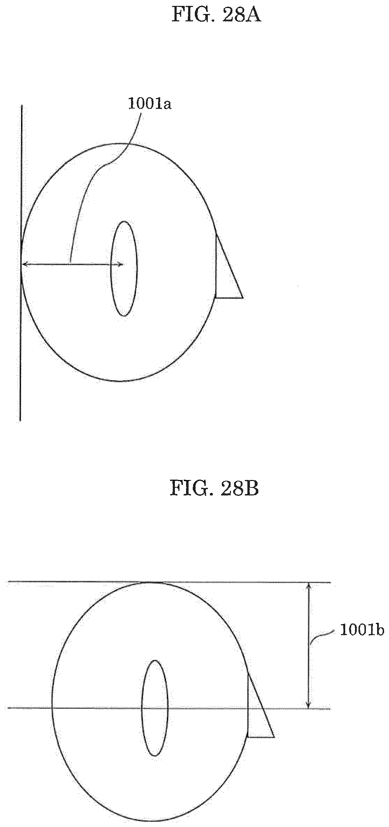

According to the AIST anthropometric database 1991 to 1992, occiput-tragus distance 1001a of from 5% to 95% of adult males and females is between 77 mm and 99 mm, inclusive, as illustrated in FIG. 28A. Moreover, as illustrated in FIG. 28B, parietal-tragus distance 1001b of from 5% to 95% of adult males and females is between 124 mm and 147 mm, inclusive, as illustrated in FIG. 28B. In FIG. 25C, the speakers are preferably located close to the positions of ears 401a and 401b (close to the positions of the tragus). The reasoning is as follows. (a) Speaker-tragus distance is preferably the same as speaker-error microphone distance. This is because sound pressure of the error microphone and sound pressure of the tragus are the same, so the noise reduction effect at the position of the tragus is more close to the noise reduction effect at the position of the error microphone. (b) Speaker-error microphone distance is preferably small. This is because when distance d0 between the speaker and error microphone indicated by relational expression (1) is small, distance d of the noise microphone indicated by relational expression (1) is also small, making it possible dispose a noise microphone closer to the error microphone and still satisfy distance d2 indicated by relational expression (3), thereby improving the correlation between the noise microphone and the error microphone and producing a high noise reduction effect. Based on the reasons stated in (a) and (b), the speakers are preferably disposed proximate the position of the tragus, and in FIG. 25C, the height of the position of the tragus from the top surface of bed 708a is preferably the same as the height of the speakers from the top surface of bed 708a. Taking into consideration that a cushion or pillow, for example, may be placed by user 401 between bed 708a and head 401c, the height of the speaker measured from the top of the bed is preferably at least 77 mm, which is the minimum occiput-tragus distance for 5% to 95% of adult males and females. Even when a cushion or pillow, etc., is not placed down, bed 708a can be reclined, as illustrated in FIG. 25A, FIG. 25B, and FIG. 25C, and between positions of ears 401a and 401b in the full flat position and in the relaxed position (FIG. 25B), which is the midway position from the upright position, it is preferable that the height of the speakers be set based on distance from the top of the bed. In such cases, between the full flat position and the relaxed position, achievement of a noise reduction effect can be anticipated.

Assuming the height of the cushion or pillow, etc., is 10 mm, height of the speakers from the top of the bed is preferably in a range of from 87 mm to 107 mm, inclusive. Note that here, the reference for the height of a speaker is the center of the speaker, but the noise reduction effect can be maintained across the range of the speaker opening.

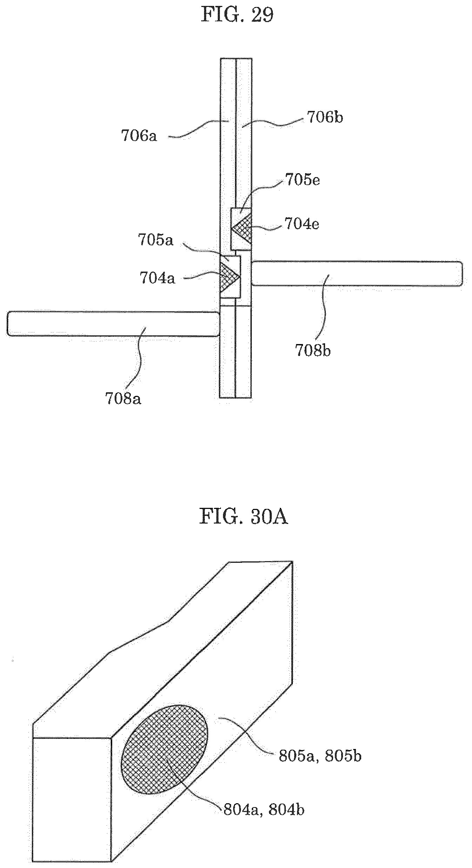

FIG. 29 illustrates an example in which the heights of beds in adjacent front and rear seats are different. As described above, speakers are preferably embedded in rear walls 706a and 706b so as not to protrude and be obstructive during reclining. By differing the heights of speaker cabinet 705a for the front seat and the speaker cabinet for the rear seat, the thickness of rear walls 706a and 706b can be reduced without causing interference with the speaker cabinets. In other words, speaker cabinet 705a for the front seat is also embedded in rear wall 706b of the rear seat, and speaker cabinet 705e for the rear seat is also embedded in rear wall 706a of the front seat. Reducing the thickness of the rear walls makes it possible to increase the amount of space for each user in a fixed-size cabin.

Note that in the example illustrated in FIG. 29, the speakers are exemplified as being offset in the height direction, but may be offset to the left and right or diagonally. Moreover, by arranging the speakers in the side walls between adjacent left and right seats in the same manner, the thickness of the side walls can be reduced.

FIG. 30A illustrates a speaker unit including speaker 804a/804b and speaker cabinet 805a/805b. Speaker 804a/804b is asymmetrically attached relative to speaker cabinet 805a/805b. Speaker cabinet 805a/805b is thick rearward of where speaker 804a/804b is attached, and thin in other regions.

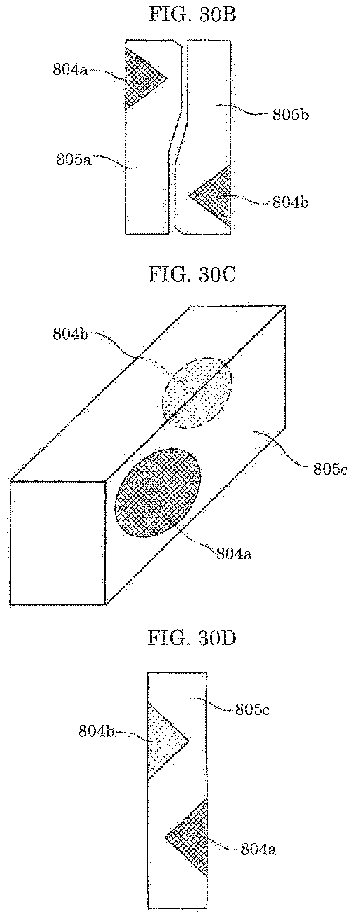

When speakers are used in this manner, even when speakers 804a and 804b are thick, as in FIG. 30B, speakers 804a and 804b can be placed close together without cabinets 805a and 805b interfering with one another. When these speaker cabinets 805a and 805b are embedded in the rear walls of adjacent front and rear seats, the thickness of the rear walls can be reduced, making it possible to increase the amount of space for each user in a fixed-size cabin.

Moreover, a configuration in which a single speaker cabinet 805c is used for housing both speakers 804a and 804b, as illustrated n FIG. 30C and FIG. 30D, may be used. In such cases as well, speakers 804a and 804b can be placed close together, and when the speaker cabinet is embedded in the rear walls of adjacent front and rear seats, the thickness of the rear walls can be reduced, making it possible to increase the amount of space for each user in a fixed-size cabin. Typically, the bigger the internal volume of the cabinet, the better the speaker performs. Therefore, using the single speaker cabinet 805C for both speakers 804a and 804b rather than providing each speaker with its own cabinet makes it possible to use less overall cabinet space to achieve the same level of performance. This further reduces the volume of the recess in the rear walls, which strengthens the rear walls and allows for the rear walls to be thinned, allowing for an increase the amount of space for each user in a fixed-size cabin.

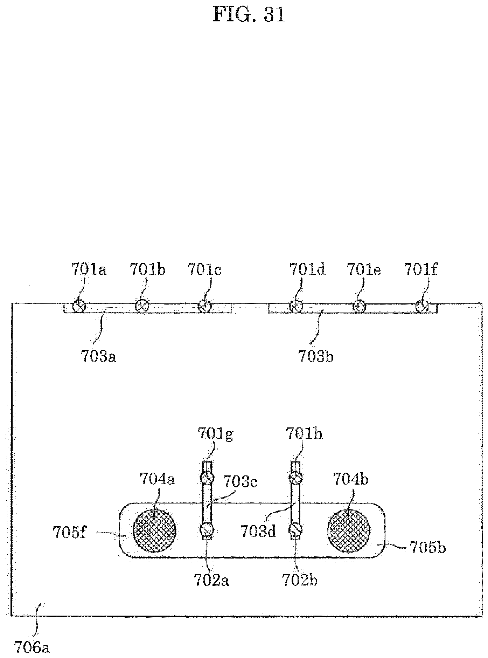

In this implementation example, rear walls between adjacent front and rear seats were exemplified, but the same applies to side walls between adjacent right and left seats. Moreover, as illustrated in FIG. 31, a configuration may be used in which a single speaker cabinet 705f whose internal volume is shared by a plurality of speakers in a single seat.

In such cases as well, the volume of the recess in the rear wall is reduced, which strengthens the rear wall and allows for the rear wall to be thinned, allowing for an increase the amount of space for each user in a fixed-size cabin.

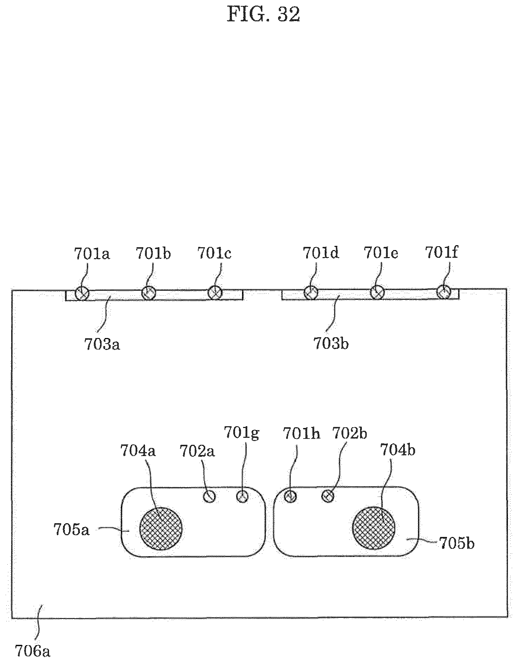

FIG. 32 illustrates an example in which noise microphones 701g and 701h and error microphones 702a and 702b are integrated in speaker cabinets 705a and 705b. Integration with speaker cabinets makes it easier to attach microphones and remove microphones when maintenance is required. Moreover, just the speaker cabinets and noise microphones may be integrated; just the speaker cabinets and error microphones may be integrated, or the speaker cabinets, noise microphones, and error microphones may be integrated.

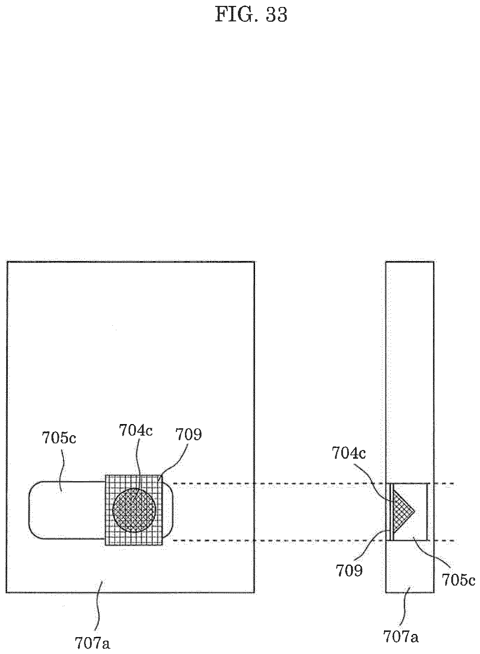

In FIG. 33, 709 indicates a speaker guard. Speaker cabinet 705c and speaker 704c are embedded in side surface (side wall) 707a, and a mesh structure is integrally formed with the side wall to form speaker guard 709. This eliminates the need to prepare and attach a separate speaker guard. This increases strength since the mesh structure is integrally formed with the side wall, and prevents the user from touching the speaker, thereby preventing negatively affecting the noise reduction effect when the speaker is touched, and preventing damage to the speaker.

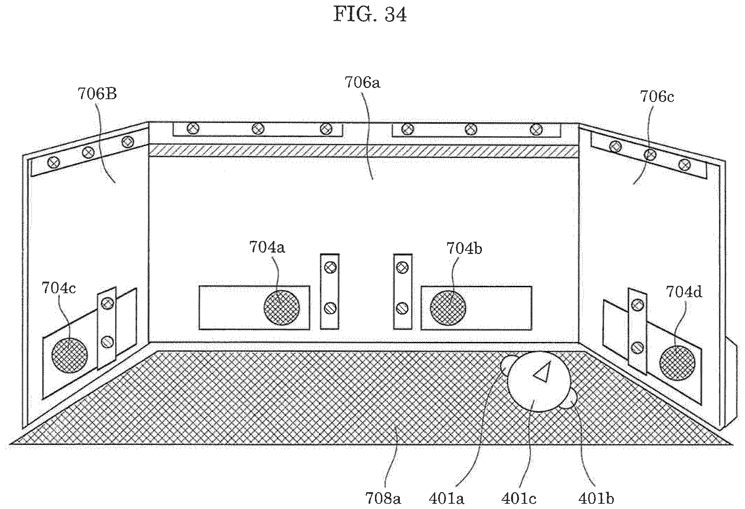

FIG. 34 illustrates an example of an arrangement of speakers 704a through 704d. By arranging the speakers on at least two surfaces, regardless of whether head 401c of the user comes between rear wall 706a and side wall 706B or between rear wall 706a and side wall 706c, the effect can be achieved. In accordance with the position of head 401c of the user, the speakers may be arranged in rear wall 706a and side wall 706B, may be arranged in rear wall 706a and side wall 706c, but the arrangement is not limited to these examples.

Moreover, as illustrated in FIG. 34, by arranging speakers in three surfaces-rear wall 706a and both side walls 706B and 707c-the noise reduction effect can be achieved regardless of which of the side walls head 401c comes near to.

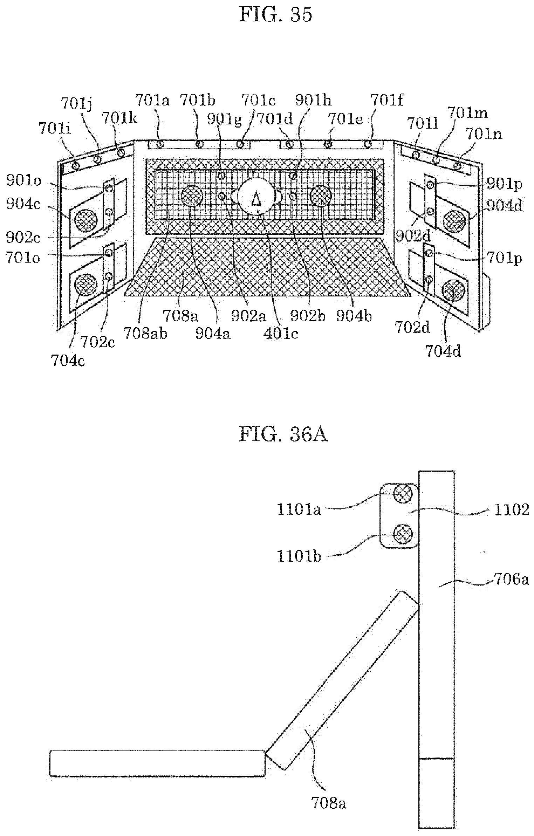

FIG. 35 schematically illustrates a noise reduction device that is compatible with at least two reclining positions. 701a through 701f, 701i through p, 901g, 901h, 901o, and 901p are noise microphones, 902a through 902d, 702c, and 702d are error microphones, and 904a through 904d, 704c, and 704d are speakers.

Noise microphones 901g and 901h, error microphones 902a and 902b, speakers 904a and 904b are embedded in headrest 708ab, which is one part of seat 708a, and move in conjunction with head 401c of the user as the seat reclines. These noise microphones, error microphones, and speakers embedded in the headrest, as well as noise microphones 701a through 701f and 701i through 701n can be commonly used regardless of position. When the headrest on which head 401c rests is positioned higher than a midway position (e.g., relaxed position or upright position), in addition to the common noise microphones, error microphones, and speakers, noise microphones 901o and 901p, error microphones 902c and 902d, and speakers 904c and 904d disposed on the upper portions of the side walls are used to reduce noise. When the headrest is positioned lower than a midway position (e.g., the full flat position), in addition to the common noise microphones, error microphones, and speakers, noise microphones 701o and 701p, error microphones 702c and 702d, and speakers 704c 704d disposed on the lower portions of the side walls are used to reduce noise. With this, since the microphones and speakers embedded in the headrest move along in conjunction with head 401c, noise can be effectively reduced.

Moreover, the microphones and speakers on the side walls are only used proximate head 401c, so it is possible to reduce power consumption and inhibit negatively affecting the noise reduction effect.

In this implementation example, which microphones and speakers are used depends on whether the headrest is above or below the midpoint, but this example is not limiting. For example, microphones and speakers to be used may be selected from three or more sets depending on position. Moreover, rather than selectively using error microphones and speakers provided on side walls in accordance with seat position, common noise microphones and microphones and speakers embedded in the headrest may be used.

Moreover, for example, the noise reduction may be activated at a predetermined position, such as in the full flat position, and may be deactivated when the seat is moved from the predetermined position, but this example is not limiting. The predetermined position may be a group of positions, such as, for example, (i) the upright position, relaxed position, and full flat position, and (ii) the relaxed position and full flat position.

FIG. 36A illustrates an example of an arrangement of noise microphones when a stationary protrusion 1102, such as a cushion, is attached to rear wall 706a. By installing the noise microphones in the periphery of the protrusion, the microphones can be kept from being covered by the user. 1101a is a noise microphone arranged on the upper portion of the protrusion, and can prevent degradation of the noise reduction effect resulting from the user touching the microphone. 1101b is a noise microphone arranged on the lower portion of the protrusion, and can improve the noise reduction effect since it can collect noise that exhibits a high degree of correlation with the error microphone as a result of the noise being detected proximate the user. Objects conceivable as the protrusion other than a cushion include a headrest and lighting device, but the protrusion is not limited to these examples, and may also include movable objects.

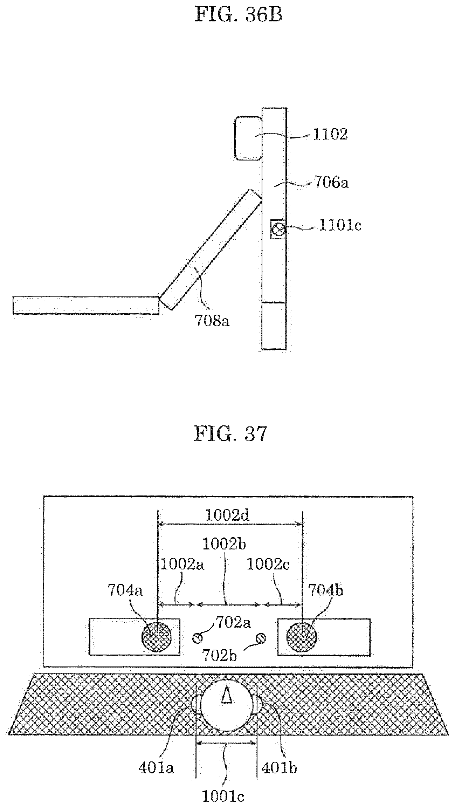

FIG. 36B illustrates an example in which a noise microphone is arranged on the outer side of the rear wall. This configuration makes it possible to prevent a decrease in the noise reduction effect resulting from the user from covering or touching the noise microphone. Moreover, since the user's voice, etc., is not easily picked up by the noise microphone with this configuration, sound echo can be prevented.

Here, although the rear wall was used as an example in FIG. 36A and FIG. 36B, the same applies to the side walls, and is not limited to the rear and side walls.

FIG. 37 illustrates an example of an arrangement of speakers 704a and 704b and error microphones 702a and 702b on the rear wall. Distance 1002a between speaker 704a and error microphone 702a, and distance 1002c between speaker 704b and error microphone 702b are preferably greater than or equal to parietal-tragus distance 1001b illustrated in FIG. 28B. This is because the closer the distance travelled by sound from speakers 704a and 704b to an ear (tragus) of the user is to the distanced travelled by sound from the speaker to the error microphone, the easier it is to estimate the noise reduction effect. Additionally, sound pressure generated by the speaker becomes close to the error microphone at an ear of the user, making it possible to improve the noise reduction effect at locations proximate an ear of the user. Moreover, the greater the distance between a speaker and an error microphone is, the greater than noise reduction range can be, so the distance is preferably at least the parietal-tragus distance.

According to the AIST anthropometric database 1991 to 1992, parietal-tragus distance 1001b of from 5% to 95% of adult males and females is between 124 mm and 147 mm, inclusive.

Additionally, the distance between error microphones 702a and 702b is preferably the same as tragus-tragus distance 1001c. This is because, when the distance between error microphones is the same as the tragus-tragus distance, the noise reduction amount between right and left sides become closer to being the same, reducing a sense of strangeness resulting from there being a difference in the noise reduction effect between the right and left sides. Moreover, error microphones 702a and 702b can be brought closer to the left and right ears 401a and 401b, respectively, thereby improving the noise reduction effect. According to the AIST anthropometric database 1991 to 1992, tragus-tragus distance 1001c of from 5% to 95% of adult males and females is between 136 mm and 157 mm, inclusive. Accordingly, distances 1002a and 1002c between speakers and error microphones is preferably at least 124 mm, distance 1002b between error microphones is preferably at least 136 mm, and distance between speakers is preferably at least 384 mm.

The reference used for speaker location is the center of the speaker, and distance between speakers means distance between the centers of the speakers. For example, for a speaker having a 50 mm radius, the distance between edges of the speakers is preferably at least 284 mm. However, although the distance between speakers is defined as the distance between the centers of the speakers here, so long as it is within the speaker opening range, the noise reduction effect can be maintained. Moreover, in this implementation example, the rear wall speakers were given as an example, but the same applies to the distance between a speaker on the rear wall and a speaker on the side wall, as well as the distance between speakers on the side wall, and is therefore not limited to the example herein.

(H)

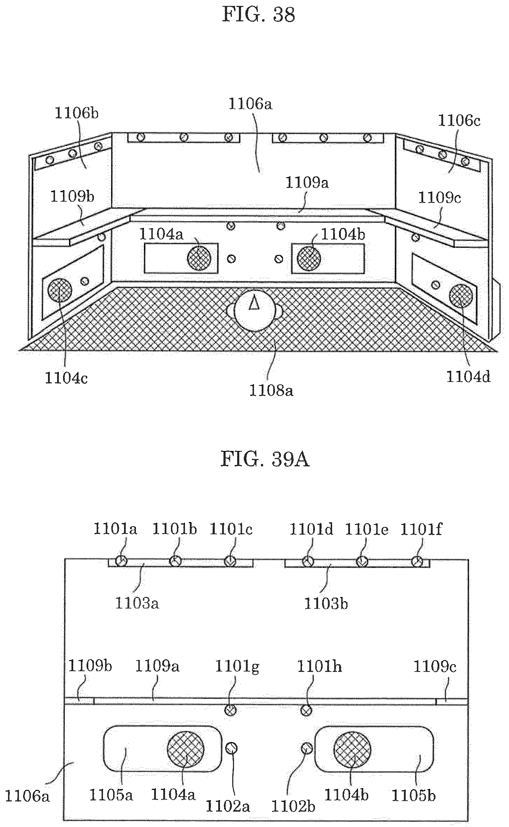

FIG. 38 illustrates an example of yet another embodiment according to the present disclosure in which the arrangement is different from that of FIG. 4 and FIG. 34, and the structure in the area surrounded by the shell as well as the height, width, and depth dimensions of the shell are also different.

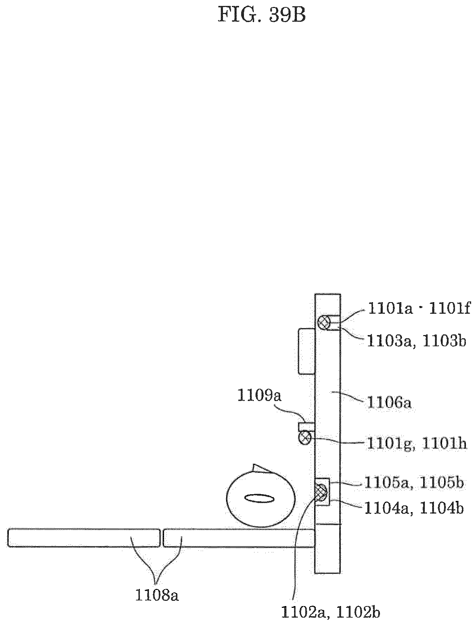

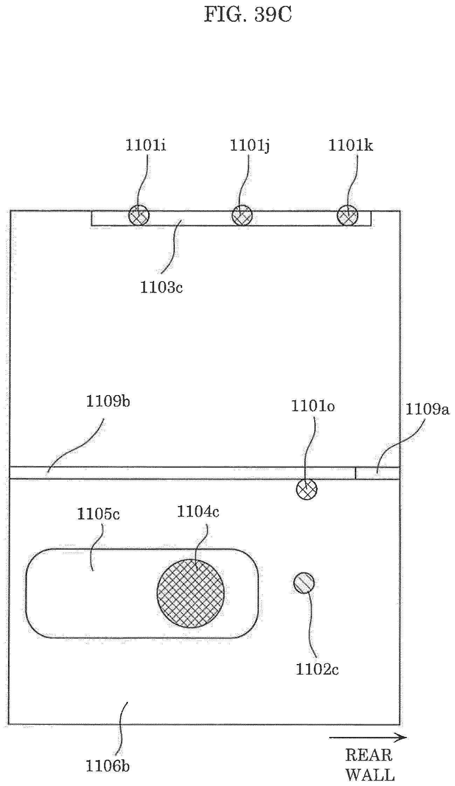

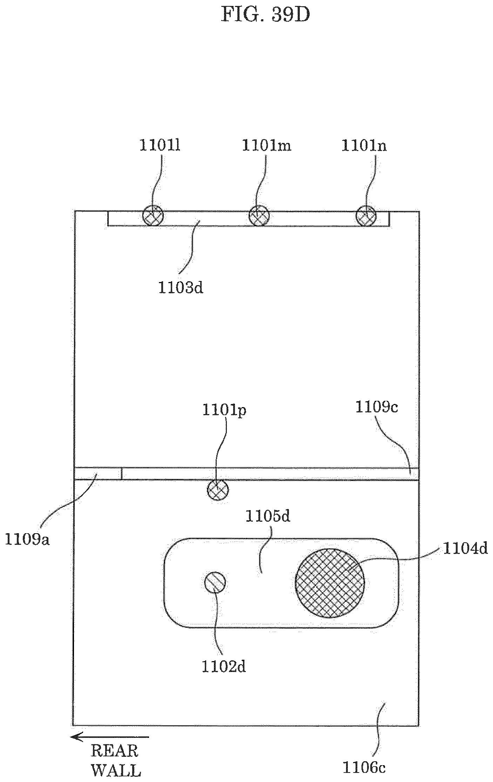

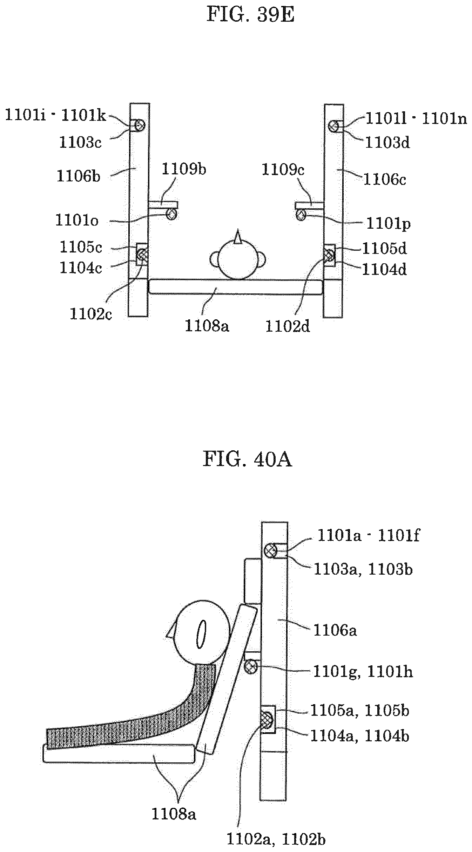

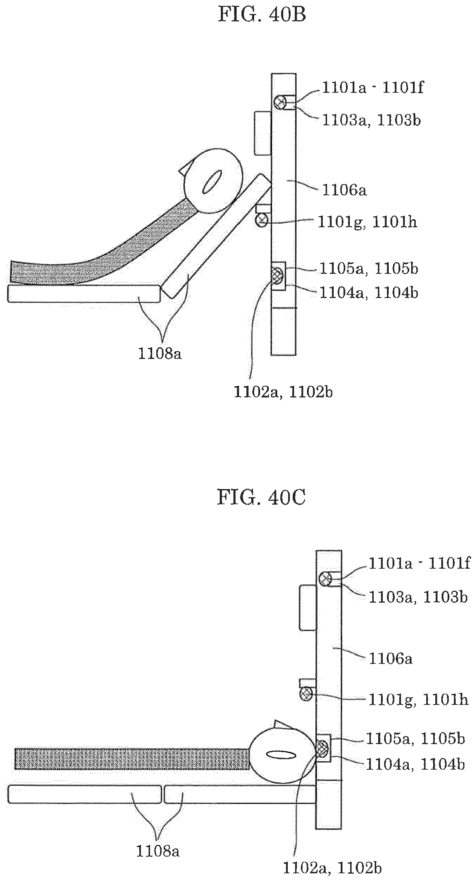

1106a indicates the rear wall of the shell, 1106b and 1106c indicate the side walls of the shell, 1108a indicates part of the seat arranged in the area surrounded by the shell, and the seat is shown completely reclined in the full fall position. When completely reclined in the full flat position, seat 1108a is also called a bed. Just like in other embodiments, the seat is reclinable so as to be finely adjustable without steps, from a full upright position to a full flat position. Examples of positions are illustrated in FIG. 40A, FIG. 40B, and FIG. 40C. FIG. 39A and FIG. 39B illustrate views of rear wall 1106a in FIG. 38 from the front and side, respectively, FIG. 39C and 39D illustrate views of side walls 1106b and 1106c from the front, respectively, and FIG. 39E illustrates a view of side walls 1106b and 1106c from the side. Each of the figures illustrate an arrangement example of speakers, noise microphones, error microphones, etc.

In FIG. 39A, noise microphones 1101a, 1101b, and 1101c are noise microphones that satisfy distance d2 in relational expression (3), where distance d0 is the distance to speaker 1104a, error microphone 1102a. Moreover, noise microphone 1101g is a noise microphone that satisfies distance d1 in relational expression (2). Similarly, noise microphones 1101d, 1101e, and 1101f are noise microphones that satisfy distance d2 in relational expression (3), where d0 is distance from speaker 1104b to error microphone 1102b. Moreover, noise microphone 1101h is a noise microphone that satisfies distance d1 in relational expression (2). Noise microphones 1101g and 1101h are disposed below table 1109a that is at the same height as armrests 1109b and 1109c when the seat is in the upright position or reclined position.

FIG. 39B clearly illustrates the positional relationship between table 1109a and noise microphones 1101g and 1101h in FIG. 39A.

In FIG. 39C, noise microphones 1101i, 1101j, and 1101k are noise microphones that satisfy distance d2 in relational expression (3), where distance d0 is the distance to speaker 1104c, error microphone 1102c. Moreover, noise microphone 1101o is a noise microphone that satisfies distance d1 in relational expression (2). Noise microphone 1101o is disposed below armrest 1109b.

In FIG. 39D, noise microphones 1101l, 1101m, and 1101n are noise microphones that satisfy distance d2 in relational expression (3), where distance d0 is the distance to speaker 1104d, error microphone 1102d. Moreover, noise microphone 1101p is a noise microphone that satisfies distance d1 in relational expression (2). Noise microphone 1101p is disposed below armrest 1109c.

FIG. 39E clearly illustrates the positional relationship between armrests 1109c and 1109c and noise microphones 1101o and 1101p illustrated in FIG. 39C and FIG. 39D.

As illustrated in FIG. 39B or FIG. 39E, when there is an armrest or table to which a noise microphone can be attached is located closer to the user than the rear or side walls, by attaching noise microphones 1101g, 1101h, 1101o, and 1101p close to the user on the armrest or table, noise close to the user can be detected thereby improving the noise reduction effect.

The noise microphones and error microphones are oriented facing inward relative to the area surrounded by the shell. Even if water were to be spilled, it will not easily enter the microphones, thereby increasing the reliability of the microphones.

Moreover, the upper noise microphones 1101a through 1101f and 1101i through 1101n are also disposed facing inward relative to the rear and side walls of the shell. Even if a hand was rested against the wall, the noise microphones would not be covered, thereby preventing negatively affecting the noise reduction effect.

1103a through 1103d are microphone cabinets to which a plurality of microphones are attached in an array. This makes it easier to attach and remove the microphones when maintenance is required, and since the cabinets hold the microphones at positions approximately equally spaced apart, it is easier to perform installation such that the collection microphones are approximately equally spaced apart.

FIG. 40A, FIG. 40B, and FIG. 40C illustrate examples of positions of the seat from the side, where FIG. 40A illustrates the most upright position, referred to as the "upright" position in this implementation example. FIG. 40C illustrates the most reclined position, referred to as the full flat position, and FIG. 40B illustrates a midway position between the positions illustrated in FIG. 40A and FIG. 40C, referred to as a "relaxing" position.

Seat 1108a can be freely reclined to any angle, and can recline to the upright, relaxing, and full flat positions. In the full flat position, seat 1108a functions as a bed.

The noise microphones, error microphones, and speakers are preferably embedded in the rear or side walls, or disposed on the bottom of an armrest or a table, so as not to protrude and be obstructive when reclining the seat. In FIG. 40A, FIG. 40B, and FIG. 40C, only noise microphones 1101a through 1101h, error microphones 1102a and 1102b, and speakers 1104a and 1104b embedded in rear wall 1106a are shown, but the noise microphones, error microphones, and speakers provided in the side walls are also preferably embedded, or disposed on the bottom of an armrest or a table, so as not to protrude and be obstructive when reclining the seat.

(I)

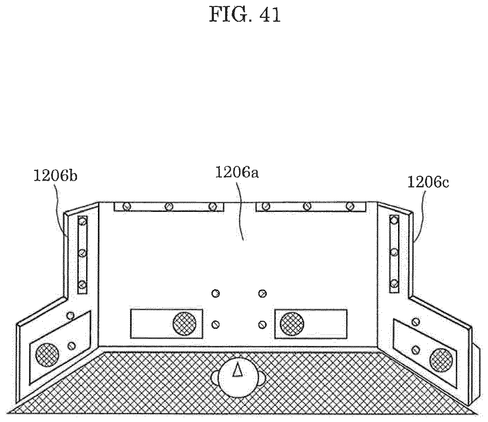

FIG. 41 illustrates an example of yet another embodiment according to the present disclosure, and illustrates an example in which the arrangement is varied from that of FIG. 38. In FIG. 38 (FIG. 39C, FIG. 39D), side walls 1106b and 1106c are rectangular in shape, but in FIG. 41, they are L-shaped. In FIG. 41, elements that are the same as in FIG. 38 share like reference signs, and repeated description thereof will be omitted.

In FIG. 41, other than rear wall 1206a not being provided with table 1109a and armrests 1109b and 1109c, the configuration is the same as in FIG. 39A. Moreover, side walls 1206b and 1206c are also not provided with armrests 1109b and 1109c.

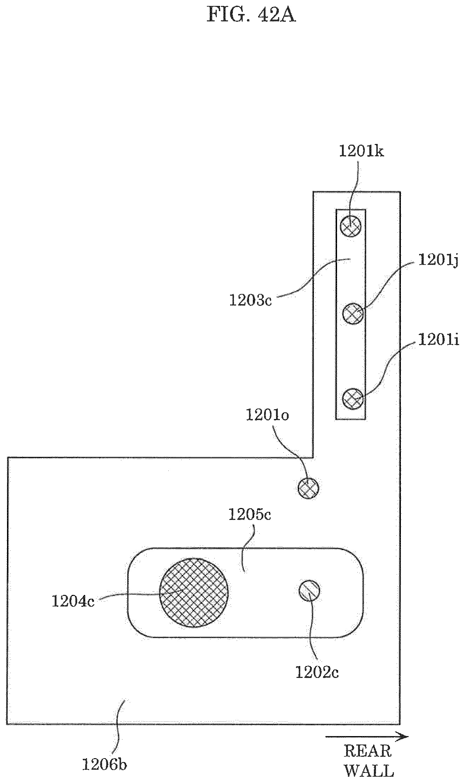

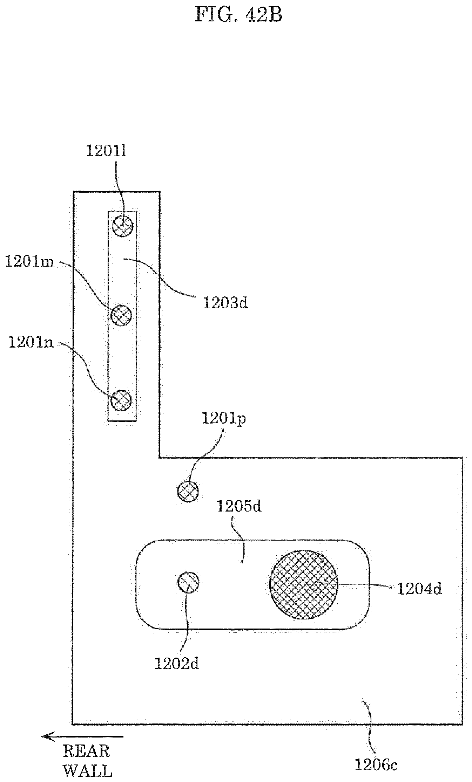

Next, the side walls will be described with reference to FIG. 42A and FIG. 42B. In FIG. 42A, noise microphones 1201i, 1201j, and 1201k are noise microphones that satisfy distance d2 in relational expression (3), where distance d0 is the distance to speaker 1204c, error microphone 1202c. Moreover, noise microphone 1201o is a noise microphone that satisfies distance d1 in relational expression (2). Moreover, distance d0 is shorter than distance d2.

Note that noise microphones 1201i, 1201j, and 1201k are attached to microphone cabinet 1203c in a vertical arrangement. This makes it easier to attach and remove the microphones when maintenance is required, and since the cabinets hold the microphones at positions approximately equally spaced apart, it is easier to perform installation such that the collection microphones are approximately equally spaced apart.

Moreover, error microphone 1202c and speaker 1204c are attached to speaker cabinet 1205c.

In FIG. 42B, noise microphones 1201l, 1201m, and 1201n are noise microphones that satisfy distance d2 in relational expression (3), where distance d0 is the distance to speaker 1204d, error microphone 1202d. Moreover, noise microphone 1201p is a noise microphone that satisfies distance d1 in relational expression (2). Moreover, distance d0 is shorter than distance d2.

Note that noise microphones 1201l, 1201m, and 1201n are attached to microphone cabinet 1203d in a vertical arrangement. Moreover, error microphone 1202d and speaker 1204d are attached to speaker cabinet 1205d.

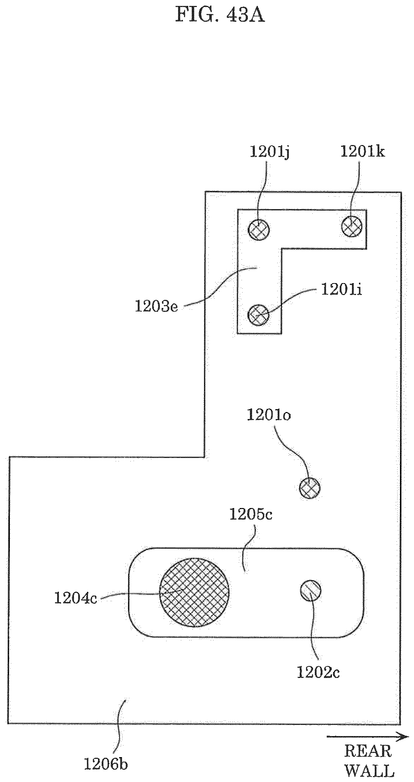

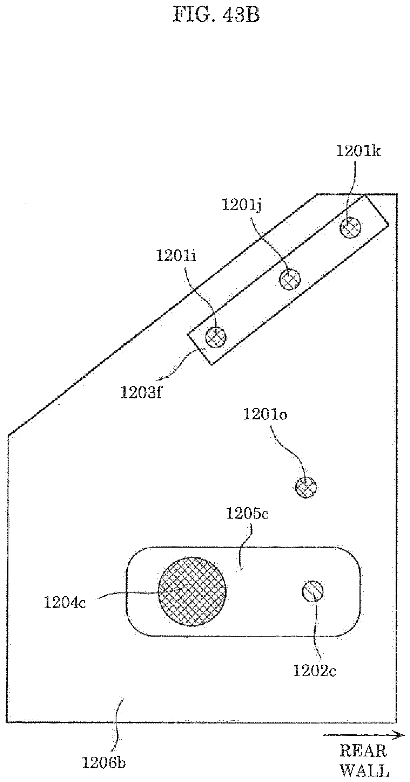

Here, the relationship between the shape of the side walls and the noise microphone arrangement will be described with reference to FIG. 43A and FIG. 43B. Note that in the following description, side wall 1206b is used in the example, but the same applies to side wall 1206c as well.

So long as there are no restrictions in the aircraft, as illustrated in FIG. 38 (FIG. 39C, FIG. 39D), the side wall can be rectangular in shape, and the noise microphones can be arranged evenly spaced apart in a single horizontal line on the top portion of the shell. However, depending on the specifications of the aircraft or the design of the shell or seat, there are cases in which the side wall may be L-shaped, as illustrated in FIG. 42A and FIG. 43A. Even in such cases, it is necessary to adapt to the shape of the side wall while maintaining noise reduction performance.

Accordingly, if the side wall is L-shaped like in FIG. 42A, noise microphones 1201i, 1201j, and 1201k are vertically arranged evenly spaced apart. Moreover, as illustrated in FIG. 43A, when the width of the upper part of the L shape is wider than in FIG. 42A such that two noise microphones can be arranged side by side, noise microphones 1201i, 1201j, and 1201k are arranged evenly spaced apart in an L shape that follows the shape of the side wall. Further, as illustrated in FIG. 43B, when the side wall has a diagonal shape, noise microphones 1201i, 1201j, and 1201k are arranged diagonally so as to follow the diagonal portion of the side wall.

Here, noise microphone 1201k is disposed in the same location in any of the configurations illustrated in FIG. 39C, FIG. 42A, FIG. 43A, and FIG. 43B. This is so that the distance to noise microphone 1101a on rear wall 1206a does not change. Moreover, the distance between noise microphones 1201i, 1201j, and 1201k does not change.

As described above, the noise microphones can be arranged to suit the shape of the side wall. In other words, by arranging, along the perimeter of the side walls, the noise microphones around the noise microphone that is closest to rear wall 1206a (in this embodiment, noise microphone 1201k) such that the distance between noise microphones is maintained, noise reduction performance can be maintained.

Note that when fewer noise microphones are to be used in the side walls, the noise microphones are removed starting with those (in this embodiment, noise microphone 1201i) farthest from the noise microphone closest to rear wall 1206a (noise microphone 1201k).

Note that noise microphones are not to be arranged on movable parts. When noise microphones are arranged on movable parts, the position of the noise microphone changes with movement of the movable part, making it impossible to maintain the noise microphone arrangement necessary for noise reduction.

INDUSTRIAL APPLICABILITY

Since the noise reduction device according to the present disclosure can effectively reduce noise in a frequency band ranging from low to high frequencies even when noise comes from various directions or there are many noise sources, like in seats in an aircraft, the noise reduction device can be implemented in a wide variety of locations.

REFERENCE MARKS IN THE DRAWINGS

100 aircraft
100a cabin
101a, 101b wing
102a, 102b engine
103a to 103c seat row
105 seat
300 noise reduction device
301 user
301a, 301b ear
310 noise source
310N main arrival path
320 noise detector
330 noise controller
331 A/D converter
332 adaptive filter
333 coefficient updater
334 D/A converter
335 A/D converter
340 control sound generator
340N main arrival path
350 error detector
401 user
401a, 401b ear
401c head
402 seat
402a shell
402aa front wall
402ab rear wall
402ac side wall
402ad side wall
402ae shelf
402b chair
402ba chair seat
402bc headrest
402bd, 402be armrest
410 noise source
420a to 420j noise microphone (noise detector)
430 noise controller
431a to 431g A/D converter
432a to 432g adaptive filter

433a to 433g coefficient updater
434a, 434b D/A converter
435a, 435b A/D converter
440a, 440b control speaker (control sound outputter)
450a, 450b error microphone (error detector)
450a1, 450a2, 450b1, 450b2 error microphone (error detector)
460a, 460b adder
470 echo canceller
480 shell
520a to 520l noise microphone (noise detector)
540a, 540b control speaker (control sound outputter)
550a, 550b error microphone (error detector)
NS1a, NS1b noise source
NSlc noise source
NS2a to NS2e noise source

Claims

1. A noise reduction device, comprising:

a plurality of noise detectors that detect noise;
a noise controller that generates a control sound signal for reducing, at a center of control in a control space, the noise detected by the plurality of noise detectors; and
a control sound outputter that outputs sound based on the control sound signal,
wherein a number of the plurality of noise detectors that are disposed closer than a distance d from the center of control is less than a number of the plurality of noise detectors that are disposed farther than the distance d from the center of control, when the distance d is expressed as d = d0 + t × v - λ / 2,
where λ is a wavelength corresponding to a control frequency f in the plurality of noise detectors, d0 is a distance from the center of control to the control sound outputter, t is a control delay time in the control sound outputter, and v is sound velocity, and
the plurality of noise detectors that are disposed farther than the distance d from the center of control are approximately equally spaced apart.

2. The noise reduction device according to claim 1, wherein
among the plurality of noise detectors, the noise detectors that are disposed farther than the distance d from the center of control are approximately equally spaced apart.

3. A noise reduction device, comprising:

a plurality of noise detectors that detect noise;
a noise controller that generates a control sound signal for reducing, at a center of control in a control space, the noise detected by the plurality of noise detectors; and

a control sound outputter that outputs sound based on the control sound signal,

wherein the plurality of noise detectors are disposed at approximately equal distances from the center of control.

4. The noise reduction device according to claim 3, wherein

dmax - dmin < λ / 2 is satisfied, where dmax is a distance from the center of control to a noise detector among the plurality of noise detectors that is disposed farthest from the center of control, dmin is a distance from the center of control to a noise detector among the plurality of noise detectors that is disposed closest to the center of control, and λ is a wavelength corresponding to a control frequency f in the plurality of noise detectors.

5. The noise reduction device according to claim 1, wherein

the noise controller performs feedforward control.

FIG. 1

EP 3 438 970 A1

FIG. 2

## FIG. 3A

NOISE SOURCE ~310

300    330

NOISE DETECTOR 320

331 A/D

332 ADAPTIVE FILTER

340 CONTROL SOUND GENERATOR

334 D/A

333 COEFFICIENT UPDATER

ERROR DETECTOR 350

A/D 335

301b

301

## FIG. 3B

310

310N

340

340N

350    301b

301

FIG. 4

EP 3 438 970 A1

FIG. 5

FIG. 6

420e

420a

420d

440a, 440b    $d_1$   450a, 450b

420c

$d_0$

$d_2$

420f

$d$

420g

420b

FIG. 7

FIG. 8

FIG. 9

FIG. 10

FIG. 11

- BEFORE NOISE REDUCTION
- 10 MICROPHONES (COMPARATIVE EXAMPLE 1)
- 12 MICROPHONES (COMPARATIVE EXAMPLE 2)

NOISE LEVEL [dB]

FREQUENCY [Hz]

FIG. 12

FIG. 12 — Graph of NOISE LEVEL [dB] versus FREQUENCY [Hz]. Legend: BEFORE NOISE REDUCTION; 10 MICROPHONES (COMPARATIVE EXAMPLE 1); 12 MICROPHONES (PRESENT IMPLEMENTATION EXAMPLE).

FIG. 13

FREQUENCY [Hz]

FIG. 14

FIG. 15

EP 3 438 970 A1

FIG. 16

FIG. 17

DIRECTION IN WHICH NOISE ENTERS

402a
420i
420h
402ab
402ad
402ac
420a
420g
420d
420f
420c
420e
420b
450a, 450b

DIRECTION IN WHICH NOISE ENTERS

EP 3 438 970 A1

## FIG. 18

FIG. 19

EP 3 438 970 A1

FIG. 20A

EP 3 438 970 A1

FIG. 20B

FIG. 21

# FIG. 22

EP 3 438 970 A1

FIG. 23A

706a

707a

707b

708a

FIG. 23B

706a

707a

707b

708a

FIG. 24A

701a    701b    701c        701d    701e    701f

703a              703b

701g      701h

705a    704a    703c       704b    705b

703d

702a    702b

706a

FIG. 24B

701i   701j   701k       701l   701m 701n

703e            703f

701o           701p

705c    704c     703g    703h    705d    704d

702c         702d

707a      REAR    REAR      707b
               WALL    WALL

## FIG. 25A

701a · 701f

703a, 703b

401c

401a, 401b

706a

701g, 701h

705a, 705b

704a, 704b

708a

702a, 702b

## FIG. 25B

701a · 701f

703a, 703b

401c

401a, 401b

706a

701g, 701h

705a, 705b

704a, 704b

708a

702a, 702b

FIG. 25C

701a · 701f
703a, 703b

706a

401c

401a, 401b

701g, 701h
705a, 705b
704a, 704b

708a

702a, 702b

FIG. 26

701i  701j  701k        701l  701m 701n

703e                    703f

701o                    701p
703g                    703h

705c  704c              705d  704d

702c                    702d

707a                    707c

REAR        REAR
WALL        WALL

46

# FIG. 27A

FIG. 27B

FIG. 28A

1001a

FIG. 28B

1001b

FIG. 29

706a

706b

705e

704e

705a

704a

708b

708a

FIG. 30A

805a, 805b

804a, 804b

## FIG. 30B

804a

805b

805a

804b

## FIG. 30C

804b

805c

804a

## FIG. 30D

805c

804b

804a

FIG. 31

FIG. 32

FIG. 33

FIG. 34

FIG. 35

FIG. 36A

## FIG. 36B

1102

706a

1101c

708a

## FIG. 37

1002d

1002b

1002a    1002c

704a    704b

702a

702b

401a    401b

1001c

FIG. 38

FIG. 39A

FIG. 39B

1101a · 1101f
1103a, 1103b

1109a

1106a

1101g, 1101h

1105a, 1105b
1104a, 1104b

1108a

1102a, 1102b

FIG. 39C

FIG. 39D

1101l   1101m   1101n

1103d

1101p      1109c

1109a

1105d

1104d

1102d

REAR
WALL

1106c

## FIG. 39E

1101i · 1101k
1103c
1106b
1101o
1105c
1104c
1102c

1109b

1109c

1108a

1102d

1101l · 1101n
1103d
1106c
1101p
1105d
1104d

## FIG. 40A

1101a · 1101f
1103a, 1103b

1106a

1101g, 1101h

1105a, 1105b
1104a, 1104b

1108a

1102a, 1102b

## FIG. 40B

1101a - 1101f
1103a, 1103b
1106a
1101g, 1101h
1105a, 1105b
1104a, 1104b
1108a
1102a, 1102b

## FIG. 40C

1101a - 1101f
1103a, 1103b
1106a
1101g, 1101h
1105a, 1105b
1104a, 1104b
1108a
1102a, 1102b

FIG. 41

FIG. 42A

1201k

1203c

1201j

1201i

1201o

1205c

1204c

1202c

1206b

REAR
WALL

## FIG. 42B

FIG. 43A

FIG. 43B

## INTERNATIONAL SEARCH REPORT

| International application No. |
| --- |
| PCT/JP2017/012238 |

**A. CLASSIFICATION OF SUBJECT MATTER**
*G10K11/178*(2006.01)i, *B64D11/06*(2006.01)i

According to International Patent Classification (IPC) or to both national classification and IPC

**B. FIELDS SEARCHED**

Minimum documentation searched (classification system followed by classification symbols)
G10K11/178, B64D11/06

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2009-029405 A  (Panasonic Corp.),<br>12 February 2009 (12.02.2009),<br>paragraphs [0058] to [0067]; fig. 12 to 13<br>& US 2008/0317254 A1<br>paragraphs [0097] to [0108]; fig. 12 to 13 | 3-4<br>1-2,5 |
| Y | JP 2000-322066 A  (Honda Motor Co., Ltd.),<br>24 November 2000 (24.11.2000),<br>paragraphs [0029] to [0042]; fig. 1 to 7<br>& US 2006/0188107 A1<br>paragraphs [0051] to [0066]; fig. 1 to 7 | 1-2,5 |
| Y | JP 2009-143392 A  (Panasonic Corp.),<br>02 July 2009 (02.07.2009),<br>paragraph [0045]; fig. 6<br>(Family: none) | 1-2,5 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
| --- | --- |
| Date of the actual completion of the international search<br>30 May 2017 (30.05.17) | Date of mailing of the international search report<br>13 June 2017 (13.06.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**